# EUROPÄISCHE PATENTSCHRIFT

(11) **EP 1 397 438 B1**
(45) Veröffentlichungstag und Bekanntmachung des Hinweises auf die Patenterteilung: **10.09.2008**
(21) Anmeldenummer: 02754591.2
(22) Anmeldetag: 28.05.2002
(51) Int. Cl.: C09B 67/22, D06P 1/38

(54) **FARBSTOFFMISCHUNGEN VON FASERREKTIVEN AZOFARBSTOFFEN UND IHRE VERWENDUNG**
DYE MIXTURES OF FIBER-REACTIVE AZODYES AND THE USE THEREOF
MELANGES DE COLORANTS AZOIQUES REAGISSANT AUX FIBRES ET UTILISATION

(30) Priorität: 02.06.2001 DE 10127062
(43) Veröffentlichungstag der Anmeldung: 17.03.2004
(73) Patentinhaber: DyStar Textilfarben GmbH & Co. Deutschland KG, 65926 Frankfurt am Main (DE)
(72) Erfinder: EICHHORN, Joachim, 65929 Frankfurt am Main (DE); RUSS, Werner, 65439 Flörsheim-Wicker (DE)
(86) Internationale Anmeldenummer: PCT/EP2002/005823
(87) Internationale Veröffentlichungsnummer: WO 2002/098989

(56) Entgegenhaltungen:
- EP-A- 0 042 108
- EP-A- 0 870 807
- EP-A- 0 974 621
- EP-A- 0 976 792
- DE-A- 3 941 080

## Beschreibung

Die Erfindung liegt auf dem technischen Gebiet der faserreaktiven Azofarbstoffe.

Farbstoffmischungen faserreaktiver Azofarbstoffe und deren Verwendung zum Färben von Hydroxy- und Carbonamidgruppen-haltigen Material in schwarzen Farbtönen sind beispielsweise aus den Dokumenten US 5,445,654, US 5,611,821, KR 94-2560, Sho 58-160362 und EP-A-0 870 807 bekannt. Diese besitzen jedoch gewisse anwendungstechnische Mängel, wie beispielsweise eine zu große Abhängigkeit der Farbausbeute von wechselnden Färbeparametern im Färbeprozeß, oder einen ungenügenden oder unegalen Farbaufbau auf Baumwolle (ein guter Farbaufbau ergibt sich aus der Fähigkeit eines Farbstoffes, bei Anwendung erhöhter Farbstoffkonzentrationen im Färbebad die entsprechend farbstärkere Färbung zu liefern), oder eine zu große Salzabhängigkeit der Färbungen. Folge dieser Mängel können schlechte Reproduzierbarkeiten der erhältlichen Färbungen sein. Aus den Dokumenten WO 98/42784, WO 98/42785, WO 93/18224 und US 5,330,539 sind Farbstoffe und Farbstoffmischungen bekannt, die in Gegenwart geringer Salzmengen gefärbt werden können, jedoch in Abwesenheit von Salz nur sehr farbschwache Färbungen liefern.

Mischungen von Reaktivfarbstoffen, die den anmeldungsgemäßen strukturell sehr nahekommen, werden auch in den Dokumenten EP-A- 0 976 792, EP-A-0 974 621 sowie DE-A-3 941 080 beschrieben.

Da es aus ökologischen und ökonomischen Gründen erforderlich ist die Salzfracht der Färbereiabwasser zu reduzieren, besteht ein Bedarf an Reaktivfarbstoffen, die in Gegenwart geringer Salzmengen oder sogar in Abwesenheit von Elektrolytsalzen, Färbungen mit hoher Farbstärke liefern.

Mit der vorliegenden Erfindung wurden nunmehr Farbstoffmischungen gefunden, die Färbungen mit hohen Farbstärken in Gegenwart von nur sehr geringen Mengen an, oder sogar in Abwesenheit von Elektrolytsalzen liefern.

Die Erfindung betrifft somit Farbstoffmischungen, die einen oder mehrere, wie zwei oder drei, bevorzugt 1 oder 2, Farbstoffe der nachstehend angegebenen und definierten allgemeinen Formel (I), 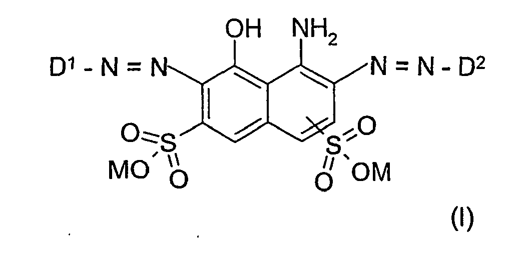 und einen oder mehrere, wie zwei oder drei, bevorzugt 1 oder 2, Farbstoffe der nachstehend angegebenen und definierten allgemeinen Formel (II) 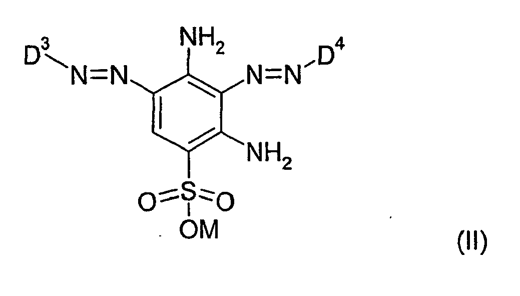 oder einen oder mehrere, wie zwei oder drei, bevorzugt 1 oder 2, Farbstoffe der nachstehend angegebenen und definierten allgemeinen Formel (III) enthalten 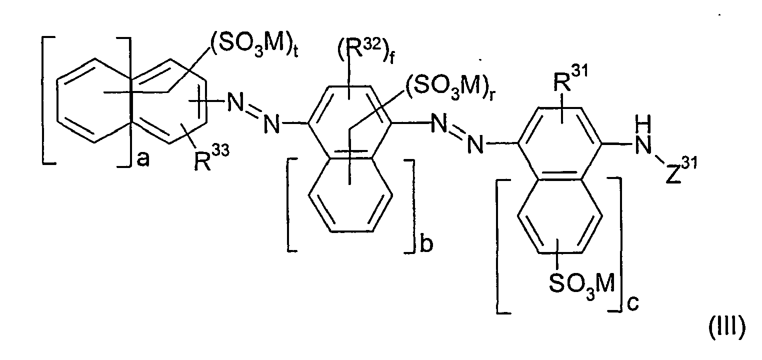 in welchen bedeuten:
D¹ und D² sind eine Gruppe der allgemeinen Formel (1) 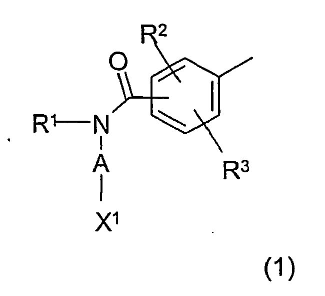
worin
R¹ Wasserstoff, (C₁-C₄)-Alkyl, Aryl oder ein substituierter Arylrest ist;
R² und R³ unabhängig voneinander Wasserstoff, (C₁-C₄)-Alkyl, (C₁-C₄)-Alkoxy, Hydroxy, Sulfo, Carboxy, Amido oder Halogen sind; und
A eine Phenylengruppe der allgemeinen Formel (2) ist 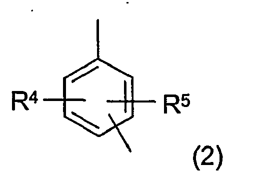 worin
   R⁴ und R⁵ unabhängig voneinander Wasserstoff, (C₁-C₄)-Alkyl, (C₁-C₄)-Alkoxy, Hydroxy, Sulfo, Carboxy, Amido oder Halogen bedeuten; oder
   eine Naphthylengruppe der allgemeinen Formel (3) 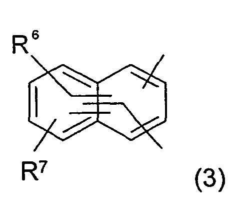 worin
   R⁶ und R⁷ unabhängig voneinander Wasserstoff, (C₁-C₄)-Alkyl, (C₁-C₄)-Alkoxy, Hydroxy, Sulfo, Carboxy, Amido oder Halogen bedeuten; oder
   eine Polymethylengruppe der allgemeinen Formel (4)

      -(CR⁸R⁹)ₖ- (4)

      worin
      k eine ganze Zahl größer 1 ist und
      R⁸ und R⁹ unabhängig voneinander Wasserstoff, (C₁-C₄)-Alkyl, (C₁-C₄)-Alkoxy, Hydroxy, Cyano, Amido, Halogen oder Aryl sind; und
X¹ für Wasserstoff oder eine Gruppe der Formel -SO₂-Z steht; oder
   für eine Phenylgruppe der allgemeinen Formel (5) stehen 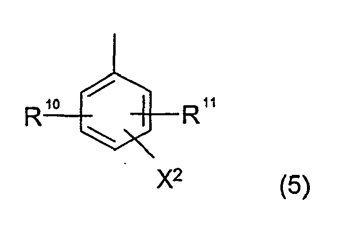 worin
   - R¹⁰ und R¹¹: unabhängig voneinander Wasserstoff, (C₁-C₄)-Alkyl, (C₁-C₄)-Alkoxy, Hydroxy, Sulfo, Carboxy, Amido oder Halogen sind; und
   - X²: eine der Bedeutungen von X¹ hat;
   oder eine Naphthylgruppe der allgemeinen Formel (6) bedeuten 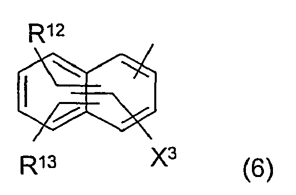 worin
   - R¹² und R¹³: unabhängig voneinander Wasserstoff, (C₁-C₄)-Alkyl, (C₁-C₄)-Alkoxy, Hydroxy, Sulfo, Carboxy, Amido oder Halogen sind; und
   - X³: eine der Bedeutungen von X¹ hat;
   - Z: -CH=CH₂, -CH₂CH₂Z¹ oder Hydroxy bedeutet,
   worin
   Z¹ Hydroxy oder eine unter Alkaliwirkung abspaltbare Gruppe ist; und
   - M: Wasserstoff, ein Alkalimetall oder ein Äquivalent eines Erdalkalimetalls bedeutet;
D³ und D⁴ haben unabhängig voneinander eine der Bedeutungen von D¹ oder D² oder sind eine Gruppe der allgemeinen Formel (7) oder (8) 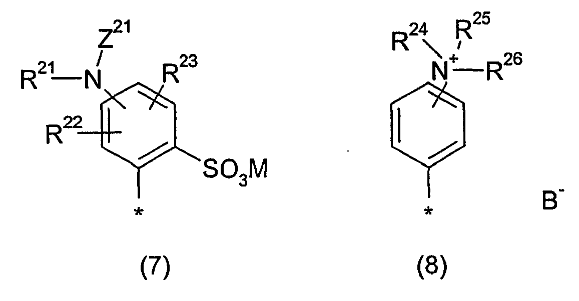 worin
   - R²² und R²³: unabhängig voneinander eine der Bedeutungen von R² und R³ haben;
   - R²¹: ist Wasserstoff, (C₁- C₄)-Alkyl, unsubstituiertes oder durch (C₁-C₄)-Alkyl, (C₁-C₄)-Alkoxy, Sulfo, Halogen oder Carboxy substituiertes Phenyl; und
   - Z²¹: ist ein heterocyclischer reaktiver Rest und bevorzugt eine Gruppe der allgemeinen Formel (9) oder (10) oder (11) 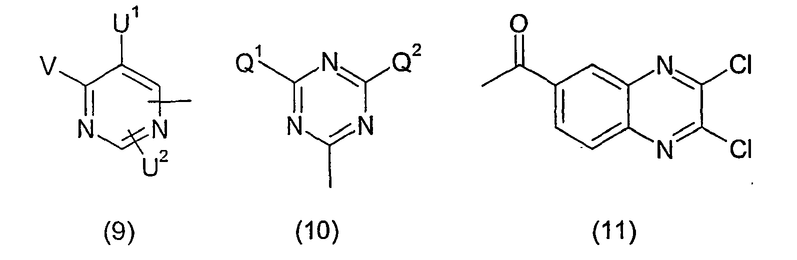
   worin
   - V: Fluor oder Chlor bedeutet;
   - U¹, U²: unabhängig voneinander Fluor, Chlor oder Wasserstoff sind; und
   - Q¹, Q²: unabhängig voneinander Chlor, Fluor, Cyanamido, Hydroxy, (C₁-C₆)-Alkoxy, Phenoxy, Sulfophenoxy, Mercapto, (C₁-C₆)-Alkylmercapto, Pyridino, Carboxypyridino, Carbamoylpyridino, oder eine Gruppe der allgemeinen Formel (12) oder (13) bedeuten 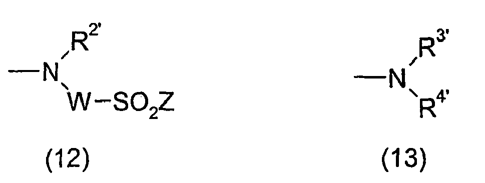 worin
   R²' Wasserstoff oder (C₁-C₆)-Alkyl, Sulfo-(C₁-C₆)-Alkyl, oder Phenyl ist, das unsubstituiert oder durch (C₁-C₄)-Alkyl, (C₁-C₄)-Alkoxy, Sulfo, Halogen, Carboxy, Acetamido, Ureido substituiert ist;
   R³' und R⁴' haben unabhängig voneinander eine der Bedeutungen von R²', oder sind eine Gruppe der allgemeinen Formel (8), oder bilden ein cyclisches Ringsystem der Formel -(CH₂)ⱼ- wobei j 4 oder 5 bedeutet, oder alternativ -(CH₂)₂-E-(CH₂)₂-, wobei E Sauerstoff, Schwefel, Sulfo, -NR⁵'- mit R⁵' = (C₁-C₆)-Alkyl ist;
   W ist Phenylen, das unsubstituiert oder substituiert ist durch 1 oder 2 Substituenten, wie (C₁-C₄)-Alkyl, (C₁-C₄)-Alkoxy, Carboxy, Sulfo, Chlor, Brom, oder ist (C₁-C₄)-Alkylen-Arylen oder (C₂-C₆)-Alkylen, das unterbrochen sein kann durch Sauerstoff, Schwefel, Sulfo, Amino, Carbonyl, Carbonamido, oder ist Phenylen-CONH-Phenylen, das unsubstituiert oder durch (C₁-C₄)-Alkyl, (C₁-C₄)-Alkoxy, Hydroxy, Sulfo, Carboxy, Amido, Ureido oder Halogen substituiert ist, oder ist Naphthylen, das unsubstituiert oder durch eine oder zwei Sulfogruppen substituiert ist; und
   Z die obengenannte Bedeutung hat;
   - R²⁴, R²⁵ und R²⁶: sind (C₁-C₄)-Alkyl oder (C₁-C₄)-Hydroxyalkyl;
   - B⁻: ist das Äquivalent eines Anions, wie Hydrogensulfat, Sulfat, Fluorid, Chlorid, Bromid, Dihydrogenphosphat, Hydrogenphosphat, Phosphat, Hydroxid oder Acetat;
   - R³¹, R³², R³³: sind unabhängig voneinander Wasserstoff, (C₁-C₄)-Alkyl, (C₁-C₄)-Alkoxy, Carboxy, Halogen, (C₁-C₄)-Alkylcarbonylamino, Benzoylamino, Ureido;
   - R³²: ist Wasserstoff, (C₁-C₄)-Alkyl;
   - Z³¹: besitzt eine der Bedeutungen von Z²¹;
   - a, b, c: sind unabhängig voneinander 0 oder 1;
   - f, r: sind unabhängig voneinander 0, 1 oder 2; und
   - t: ist 1, 2 oder 3.

In der allgemeinen Formel (I) steht mindestens einer der Reste D¹ und D² für eine Gruppe der allgemeinen Formel (1);
wobei im Falle, daß A für eine Gruppe der allgemeinen Formel (4) steht, R¹ für Aryl oder substituiertes Aryl steht; und
der Reaktivfarbstoff der allgemeinen Formel (I) mindestens eine -SO₂-Z- Gruppe enthält.

In den obigen allgemeinen Formeln sowie in den nachfolgenden allgemeinen Formeln können die einzelnen Formelglieder, sowohl verschiedener als auch gleicher Bezeichnung, im Rahmen ihrer Bedeutung zueinander gleiche oder voneinander verschiedene Bedeutungen haben.

Für Substituenten R stehende (C₁-C₄)-Alkylgruppen können geradkettig oder verzweigt sein und bedeuten insbesondere Methyl, Ethyl, n-Propyl, i-Propyl, n-Butyl, i-Butyl, sek.-Butyl und tert.-Butyl. Bevorzugt sind Methyl und Ethyl. Analoges gilt für (C₁-C₄)-Alkoxygruppen.

Für Substituenten R stehende Arylgruppen sind insbesondere die Phenylgruppe. Eine für R¹ stehende substituierte Arylgruppe ist insbesondere eine mit ein, zwei oder drei voneinander unabhängigen Gruppen aus der Reihe (C₁-C₄)-Alkyl, (C₁-C₄)-Alkoxy, Hydroxy, Sulfo, Carboxy, Amido oder Halogen substituierte Phenylgruppe. Für Substituenten R stehendes Halogen ist insbesondere Fluor, Chlor und Brom, wobei Fluor und Chlor bevorzugt sind.

Alkalisch eliminierbare Substituenten Z¹, die in β-Stellung der Ethylgruppe von Z stehen, sind beispielsweise Halogenatome, wie Chlor und Brom, Estergruppen organischer Carbon- und Sulfonsäuren, wie Alkylcarbonsäuren, ggf. substituierter Benzolcarbonsäuren und ggf. substituierter Benzolsulfonsäuren, wie die Gruppen Alkanoyloxy von 2 bis 5 C-Atomen, hiervon insbesondere Acetyloxy, Benzoyloxy, Sulfobenzoyloxy, Phenylsulfonyloxy und Toluylsulfonyloxy, des weiteren saure Estergruppen anorganischer Säuren, wie der Phosphorsäure, Schwefelsäure und Thioschwefelsäure (Phosphato-, Sulfato- und Thiosulfatogruppen), ebenso Dialkylaminogruppen mit Alkylgruppen von jeweils 1 bis 4 C-Atomen, wie Dimethylamino und Diethylamino.

Z ist bevorzugt Vinyl, β-Chlorethyl und insbesondere bevorzugt β-Sulfatoethyl.

Die Gruppen "Sulfo", "Carboxy", "Thiosulfato", "Phosphato", und "Sulfato" schließen sowohl deren Säureform als auch deren Salzform ein. Demgemäß bedeuten Sulfogruppen Gruppen entsprechend der allgemeinen Formel -SO₃M, Thiosulfatogruppen Gruppen entsprechend der allgemeinen Formel -S-SO₃M, Carboxygruppen Gruppen entsprechend der allgemeinen Formel -COOM, Phosphatogruppen Gruppen entsprechend der allgemeinen Formel -OPO₃M₂ und Sulfatogruppen Gruppen entsprechend der allgemeinen Formel -OSO₃M, jeweils mit M der obengenannten Bedeutung.

Die Farbstoffe der allgemeinen Formel (I) bis (III) können innerhalb der Bedeutung von Z unterschiedliche faserreaktive Gruppen -SO₂Z besitzen. Insbesondere können die faserreaktiven Gruppen -SO₂Z zum einen Vinylsulfonylgruppen und zum anderen Gruppen -CH₂CH₂Z¹, bevorzugt β-Sulfatoethylsulfonyl-Gruppen, bedeuten. Enthalten die Farbstoffe der allgemeinen Formel (I) bis (III) teilweise Vinylsulfonylgruppen, so liegt der Anteil des jeweiligen Farbstoffes mit der Vinylsulfonylgruppe bis zu etwa 30 Mol-%, bezogen auf die jeweilige Gesamtfarbstoffmenge, vor.

Für M stehendes Alkali ist insbesondere Lithium, Natrium und Kalium. Bevorzugt steht M für Wasserstoff oder Natrium.

k bedeutet bevorzugt die Zahl 2 oder 3.

Die Reste R¹ bis R¹³ sind bevorzugt Wasserstoff, R⁶, R⁷, R¹² und R¹³ sind außerdem bevorzugt Sulfo.

Im Falle, dass A für Phenylen und X¹ für -SO₂Z stehen, steht die SO₂Z-Gruppe bevorzugt in meta- oder para-Stellung zum Stickstoffatom. In der Gruppe der allgemeinen Formel (1) steht die Carbonamid-Gruppe bevorzugt in para- oder meta-Position zur Diazogruppe. Im Falle, dass A für Naphthylen steht, steht die Bindung, die zum Stickstoffatom führt, bevorzugt in β-Stellung an den Naphthalinkern gebunden. Im Falle, dass D¹ oder D² für eine Gruppe der allgemeinen Formel (6) steht, steht die Bindung, die zur Diazogruppe führt bevorzugt in β-Stellung an den Naphthalinkern gebunden. Im Falle, daß D¹ oder D² für eine Gruppe der allgemeinen Formel (5) und X² für -SO₂Z stehen, steht die SO₂Z-Gruppe bevorzugt in meta- oder para-Stellung zur Diazogruppe.

Beispiele für für A stehende Substituenten sind insbesondere 1,2-Phenylen, 1,3-Phenylen, 1,4-Phenylen, 2-Chlor-1,4-phenylen, 2-Chlor-1,5-phenylen, 2-Brom-1,4-phenylen, 2-Sulfo-1,4-phenylen, 2-Sulfo-1,5-phenylen, 2-Methoxy-1,5-phenylen, 2-Ethoxy-1,5-phenylen, 2,5-Dimethoxy-1,4-phenylen, 2-Methoxy-5-methyl-1,4-phenylen, 2-Methyl-1,4-phenylen, 2,6-Naphthylen, 2,8-Naphthylen, 1-Sulfo-2,6-naphthylen, 6-Sulfo-2,8-naphthylen oder 1,2-Ethylen und 1,3-Propylen.

Besonders bevorzugt steht A für 1,3-Phenylen, 1,4-Phenylen, 2-Sulfo-1,4-phenylen, 2-Methoxy-1,5-phenylen, 2,5-Dimethoxy-1,4-phenylen, 2-Methoxy-5-methyl-1,4-phenylen oder 1,2-Ethylen und 1,3-Propylen, wobei im Falle der beiden zuletzt genannten Alkylengruppen der Rest R¹ bevorzugt Phenyl und 2-Sulfophenyl bedeutet.

Für D¹ oder D² stehende Gruppen der allgemeinen Formel (5) und (6) sind beispielsweise 2-(β-Sulfatoethylsulfonyl)-phenyl, 3-(β-Sulfatoethylsulfonyl)-phenyl, 4-(β-Sulfatoethylsulfonyl)-phenyl, 2-Carboxy-5-(β-sulfatoethylsulfonyl)-phenyl, 2-Chlor-4-(β-sulfatoethylsulfonyl)-phenyl, 2-Chlor-5-(β-sulfatoethylsulfonyl)-phenyl, 2-Brom-4-(β-sulfatoethylsulfonyl)-phenyl, 2-Sulfo-4-(β-sulfatoethylsulfonyl)-phenyl, 2-Sulfo-5-(β-sulfatoethylsulfonyl)-phenyl, 2-Methoxy-5-(β-sulfatoethylsulfonyl)-phenyl, 2-Ethoxy-5-(β-sulfatoethylsulfonyl)-phenyl, 2,5-Dimethoxy-4-(β-sulfatoethylsulfonyl)-phenyl, 2-Methoxy-5-methyl-4-(β-sulfatoethylsulfonyl)-phenyl, 2-Methyl-4-(β-sulfatoethylsulfonyl)-phenyl, 2- oder 3- oder 4-(β-Thiosulfatoethylsulfonyl)-phenyl, 2-Methoxy-5-(β-thiosulfatoethylsulfonyl)-phenyl, 2-Sulfo-4-(β-phosphatoethylsulfonyl)-phenyl, 2- oder 3- oder 4-Vinylsulfonyl-phenyl, 2-Sulfo-4-vinylsulfonyl-phenyl, 2-Chlor-4-(β-chlorethylsulfonyl)-phenyl, 2-Chlor-5-(β-chlorethylsulfonyl)-phenyl, 3- oder 4-(β-Acetoxyethylsulfonyl)-phenyl, 6- oder 8-(β-Sulfatoethylsulfonyl)-naphth-2-yl, 6-(β-Sulfatoethylsulfonyl)-1-sulfo-naphth-2-yl und 8-(β-Sulfatoethylsulfonyl)-6-sulfo-naphth-2-yl, bevorzugt hiervon 3-(β-Sulfatoethylsulfonyl)-phenyl, 4-(β-Sulfatoethylsulfonyl)-phenyl, 2-Sulfo-4-(β-sulfatoethylsulfonyl)-phenyl, 2-Methoxy-5-(β-sulfatoethylsulfonyl)-phenyl, 2,5-Dimethoxy-4-(β-sulfatoethylsulfonyl)-phenyl, 2-Methoxy-5-methyl-4-(β-sulfatoethylsulfonyl)-phenyl und 3- oder 4-Vinylsulfonyl-phenyl.

In der allgemeinen Formel (II) sind D³ und D⁴ bevorzugt 3-(β-Sulfatoethylsulfonyl)-phenyl, 4-(β-Sulfatoethylsulfonyl)-phenyl, 2-Sulfo-4-(β-sulfatoethylsulfonyl)-phenyl, 2-Methoxy-5-(β-sulfatoethylsulfonyl)-phenyl, 2,5-Dimethoxy-4-(β-sulfatoethylsulfonyl)-phenyl, 2-Methoxy-5-methyl-4-(β-sulfatoethylsulfonyl)-phenyl, 3- oder 4-Vinylsulfonyl-phenyl, 1-Sulfo-4-(2,4-difluoro-pyrimidin-6-yl)-amino-2-phenyl oder 1-Sulfo-4-(4,6-difluoro-pyrimidin-2-yl)-amino-2-phenyl oder eine Gruppe der allgemeinen Formel (1), wobei A, R¹ bis R³ und X¹ die oben beschriebenen bevorzugten Bedeutungen besitzen.

In der allgemeinen Formel (7) bedeuten die Reste R²¹ bis R²³ bevorzugt Wasserstoff und R²² und R²³ auch bevorzugt Sulfo.

In der allgemeinen Formel (8) sind die Reste R²⁴ bis R²⁶ bevorzugt Methyl oder Ethyl.

B⁻ ist bevorzugt Sulfat oder Chlorid.

In den allgemeinen Formeln (12) und (13) sind die Reste R²' bis R⁴'bevorzugt Wasserstoff oder Methyl, R²' ist bevorzugt auch Phenyl und R³', R⁴' sind bevorzugt 2-Sulfoethyl, 2-, 3- oder 4-Sulfophenyl, 3- oder 4-Trimethylammoniumphenylsulfat, 3- oder 4-Trimethylammoniumphenylchlorid, oder R³' und R⁴' bilden ein cyclisches Ringsystem, das bevorzugt der Formel -(CH₂)₂-O-(CH₂)₂- entspricht.

W ist bevorzugt 1,3-Phenylen, 1,4-Phenylen, 2-Sulfo-1,4-phenylen, 2-Methoxy-1,5-phenylen, 2,5-Dimethoxy-1,4-phenylen, 2-Methoxy-5-methyl-1,4-phenylen, 1,2-Ethylen, 1,3-Propylen.

Q¹, Q² sind unabhängig voneinander bevorzugt Fluor, Chlor, Carboxypyridino, Carbamoylpyridino oder eine Gruppe der allgemeinen Formel (12) oder (13) worin R²' bis R⁴' die bevorzugten Bedeutungen und W und Z die oben genannten Bedeutungen haben.

Beispiele für die Gruppen Z²¹ und Z³¹ sind 2,4-Dichlor-1,3,5-triazin-6-yl, 2-Chlor-4-hydroxy-1,3,5-triazin-6-yl, 2-Chlor-4-methoxy-1,3,5-triazin-6-yl, 2-Chlor-4-phenoxy-1,3,5-triazin-6-yl, 2-Chlor-4-(4-sulfophenoxy)-1,3,5-triazin-6-yl, 2-Chlor-4-methylmercapto-1,3,5-triazin-6-yl, 2-Chlor-4-morpholino-1,3,5-triazin-6-yl, 2-Chlor-4-phenylamino-1,3,5-triazin-6-yl, 2-Chlor-4-methylphenylamino-1,3,5-triazin-6-yl, 2-Chlor-4-(2-sulfophenylamino)-1,3,5-triazin-6-yl, 2-Chlor-4-(3-sulfophenylamino)-1,3,5-triazin-6-yl, 2-Chlor-4-(4-sulfophenylamino)-1,3,5-triazin-6-yl, 2-Chlor-4-(2,5-disulfophenylamino)-1,3,5-triazin-6-yl, 2-Chlor-4-(3-trimethylammoniumphenylamino)-1,3,5-triazin-6-yl, 2-Chlor-4-(4-trimethylammoniumphenylamino)-1,3,5-triazin-6-yl, 2-Chlor-4-(2-sulfoethylamino)-1,3,5-triazin-6-yl, 2-Chlor-4-(3-carboxypyridino)-1,3,5-triazin-6-yl, 2-Chlor-4-(4-carboxypyridino)-1,3,5-triazin-6-yl, 2-Chlor-4-(3-carbamoylpyridino)-1,3,5-triazin-6-yl, 2-Chlor-4-(4-carbamoylpyridino)-1,3,5-triazin-6-yl, 2-Chlor-4-(2-(2-sulfatoethylsulfonyl)-phenylamino)-1,3,5-triazin-6-yl, 2-Chlor-4-(3-(2-sulfatoethylsulfonyl)-phenylamino)-1,3,5-triazin-6-yl, 2-Chlor-4-(4-(2-sulfatoethylsulfonyl)-phenylamino)-1,3,5-triazin-6-yl, 2-Chlor-4-(N-ethyl-4-(2-sulfatoethylsulfonyl)-phenylamino)-1,3,5-triazin-6-yl, 2-Chlor-4-(2-carboxy-5-(2-sulfatoethylsulfonyl)-phenylamino)-1,3,5-triazin-6-yl, 2-Chlor-4-(2-chlor-4-(2-sulfatoethylsulfonyl)-phenylamino)-1,3,5-triazin-6-yl, 2-Chlor-4-(2-chlor-5-(2-sulfatoethylsulfonyl)-phenylamino)-1,3,5-triazin-6-yl, 2-Chlor-4-(2-brom-4-(2-sulfatoethylsulfonyl)-phenylamino)-1,3,5-triazin-6-yl, 2-Chlor-4-(2-sulfo-4-(2-sulfatoethylsulfonyl)-phenylamino)-1,3,5-triazin-6-yl, 2-Chlor-4-(2-sulfo-5-(2-sulfatoethylsulfonyl)-phenylamino)-1,3,5-triazin-6-yl, 2-Chlor-4-(2-methoxy-5-(2-sulfatoethylsulfonyl)-phenylamino)-1,3,5-triazin-6-yl, 2-Chlor-4-(2,5-dimethoxy-4-(2-sulfatoethylsulfonyl)-phenylamino)-1,3,5-triazin-6-yl, 2-Chlor-4-(2-methoxy-5-methyl-4-(2-sulfatoethylsulfonyl)-phenylamino)-1,3,5-triazin-6-yl, 2-Chlor-4-(2-methyl-4-(2-sulfatoethylsulfonyl)-phenylamino)-1,3,5-triazin-6-yl, 2-Chlor-4-(2-(vinylsulfonyl)-phenylamino)-1,3,5-triazin-6-yl, 2-Chlor-4-(3-(vinylsulfonyl)-phenylamino)-1,3,5-triazin-6-yl, 2-Chlor-4-(4-(vinylsulfonyl)-phenylamino)-1,3,5-triazin-6-yl, 2-Chlor-4-(N-ethyl-4-(vinylsulfonyl)-phenylamino)-1,3,5-triazin-6-yl, 2-Chlor-4-(6-(2-sulfatoethylsulfonyl)-naphth-2-ylamino)-1,3,5-triazin-6-yl, 2-Chlor-4-(8-(2-sulfatoethylsulfonyl)-naphth-2-ylamino)-1,3,5-triazin-6-yl, 2-Chlor-4-(8-(2-sulfatoethylsulfonyl)-6-sulfo-naphth-2-ylamino)-1,3,5-triazin-6-yl, 2-Chlor-4-(3-(2-(2-sulfatoethylsulfonyl)-ethylcarbamoyl)-phenylamino)-1,3,5-triazin-6-yl, 2-Chlor-4-(3-(2-(vinylsulfonyl)-ethylcarbamoyl)-phenylamino)-1,3,5-triazin-6-yl, 2-Chlor-4-(4-(N-methyl-2-(2-sulfatoethylsulfonyl)-ethylcarbamoyl)-phenylamino)-1,3,5-triazin-6-yl, 2-Chlor-4-(4-(N-phenyl-2-(2-sulfatoethylsulfonyl)-ethylcarbamoyl)-phenylamino)-1,3,5-triazin-6-yl, 2-Chlor-4-(4-(3-(2-sulfatoethylsulfonyl)-phenylcarbamoyl)-phenylamino)-1,3,5-triazin-6-yl, 2-Chlor-4-(4-(4-(2-sulfatoethylsulfonyl)-phenylcarbamoyl)-phenylamino)-1,3,5-triazin-6-yl, 2-Chlor-4-(3-(3-(2-sulfatoethylsulfonyl)-phenylcarbamoyl)-phenylamino)-1,3,5-triazin-6-yl, 2-Chlor-4-(3-(4-(2-sulfatoethylsulfonyl)-phenylcarbamoyl)-phenylamino)-1,3,5-triazin-6-yl, 2-Chlor-4-(3-(2-sulfatoethylsulfonyl)-propylamino)-1,3,5-triazin-6-yl, 2-Chlor-4-(N-methyl-N-(2-(2-sulfatoethylsulfonyl)-ethyl)-amino)-1,3,5-triazin-6-yl, 2-Chlor-4-(N-phenyl-N-(2-(2-sulfatoethylsulfonyl)-ethyl)-amino)-1,3,5-triazin-6-yl, 2-Fluor-4-hydroxy-1,3,5-triazin-6-yl, 2-Fluor-4-methoxy-1,3,5-triazin-6-yl, 2-Fluor-4-phenoxy-1,3,5-triazin-6-yl, 2-Fluor-4-(4-sulfophenoxy)-1,3,5-triazin-6-yl, 2-Fluor-4-morpholino-1,3,5-triazin-6-yl, 2-Fluor-4-phenylamino-1,3,5-triazin-6-yl, 2-Fluor-4-methylphenylamino-1,3,5-triazin-6-yl, 2-Fluor-4-(2-sulfophenylamino)-1,3,5-triazin-6-yl, 2-Fluor-4-(3-sulfophenylamino)-1,3,5-triazin-6-yl, 2-Fluor-4-(4-sulfophenylamino)-1,3,5-triazin-6-yl, 2-Fluor-4-(2,5-disulfophenylamino)-1,3,5-triazin-6-yl, 2-Fluor-4-(3-trimethylammoniumphenylamino)-1,3,5-triazin-6-yl, 2-Fluor-4-(4-trimethylammoniumphenylamino)-1,3,5-triazin-6-yl, 2-Fluor-4-(2-(2-sulfatoethylsulfonyl)-phenylamino)-1,3,5-triazin-6-yl, 2-Fluor-4-(3-(2-sulfatoethylsulfonyl)-phenylamino)-1,3,5-triazin-6-yl, 2-Fluor-4-(4-(2-sulfatoethylsulfonyl)-phenylamino)-1,3,5-triazin-6-yl, 2-Fluor-4-(N-ethyl-4-(2-sulfatoethylsulfonyl)-phenylamino)-1,3,5-triazin-6-yl, 2-Fluor-4-(2-carboxy-5-(2-sulfatoethylsulfonyl)-phenylamino)-1,3,5-triazin-6-yl, 2-Fluor-4-(2-chlor-4-(2-sulfatoethylsulfonyl)-phenylamino)-1,3,5-triazin-6-yl, 2-Fluor-4-(2-chlor-5-(2-sulfatoethylsulfonyl)-phenylamino)-1,3,5-triazin-6-yl, 2-Fluor-4-(2-brom-4-(2-sulfatoethylsulfonyl)-phenylamino)-1,3,5-triazin-6-yl, 2-Fluor-4-(2-sulfo-4-(2-sulfatoethylsulfonyl)-phenylamino)-1,3,5-triazin-6-yl, 2-Fluor-4-(2-sulfo-5-(2-sulfatoethylsulfonyl)-phenylamino)-1,3,5-triazin-6-yl, 2-Fluor-4-(2-methoxy-5-(2-sulfatoethylsulfonyl)-phenylamino)-1,3,5-triazin-6-yl, 2-Fluor-4-(2,5-dimethoxy-4-(2-sulfatoethylsulfonyl)-phenylamino)-1,3,5-triazin-6-yl, 2-Fluor-4-(2-methoxy-5-methyl-4-(2-sulfatoethylsulfonyl)-phenylamino)-1,3,5-triazin-6-yl, 2-Fluor-4-(2-methyl-4-(2-sulfatoethylsulfonyl)-phenylamino)-1,3,5-triazin-6-yl, 2-Fluor-4-(2-(vinylsulfonyl)-phenylamino)-1,3,5-triazin-6-yl, 2-Fluor-4-(3-(vinylsulfonyl)-phenylamino)-1,3,5-triazin-6-yl, 2-Fluor-4-(4-(vinylsulfonyl)-phenylamino)-1,3,5-triazin-6-yl, 2-Fluor-4-(N-ethyl-4-(vinylsulfonyl)-phenylamino)-1,3,5-triazin-6-yl, 2-Fluor-4-(3-(2-(2-sulfatoethylsulfonyl)-ethylcarbamoyl)-phenylamino)-1,3,5-triazin-6-yl, 2-Fluor-4-(3-(2-(vinylsulfonyl)-ethylcarbamoyl)-phenylamino)-1,3,5-triazin-6-yl, 2-Fluor-4-(4-(N-methyl-2-(2-sulfatoethylsulfonyl)-ethylcarbamoyl)-phenylamino)-1,3,5-triazin-6-yl, 2-Fluor-4-(4-(N-phenyl-2-(2-sulfatoethylsulfonyl)-ethylcarbamoyl)-phenylamino)-1,3,5-triazin-6-yl, 2-Fluor-4-(4-(3-(2-sulfatoethylsulfonyl)-phenylcarbamoyl)-phenylamino)-1,3,5-triazin-6-yl, 2-Fluor-4-(4-(4-(2-sulfatoethylsulfonyl)-phenylcarbamoyl)-phenylamino)-1,3,5-triazin-6-yl, 2-Fluor-4-(3-(3-(2-sulfatoethylsulfonyl)-phenylcarbamoyl)-phenylamino)-1,3,5-triazin-6-yl, 2-Fluor-4-(3-(4-(2-sulfatoethylsulfonyl)-phenylcarbamoyl)-phenylamino)-1,3,5-triazin-6-yl, 2-Fluor-4-(3-(2-sulfatoethylsulfonyl)-propylamino)-1,3,5-triazin-6-yl, 2-Fluor-4-(N-methyl-N-(2-(2-sulfatoethylsulfonyl)-ethyl)-amino)-1,3,5-triazin-6-yl, 2-Fluor-4-(N-phenyl-N-(2-(2-sulfatoethylsulfonyl)-ethyl)-amino)-1,3,5-triazin-6-yl, 2,4-Di(4-(2-sulfatoethylsulfonyl)-phenylamino)-1,3,5-triazin-6-yl, 2,4-Di(3-(2-sulfatoethylsulfonyl)-phenylamino)-1,3,5-triazin-6-yl, 2-(3-(2-Sulfatoethylsulfonyl)-phenylamino)-4-(4-(2-sulfatoethylsulfonyl)-phenylamino)-1,3,5-triazin-6-yl, 2-(N-Ethyl-4-(2-sulfatoethylsulfonyl)-phenylamino)-4-(4-(2-sulfatoethylsulfonyl)-phenylamino)-1,3,5-triazin-6-yl, 2-(N-Ethyl-4-(2-sulfatoethylsulfonyl)-phenylamino)-4-(3-(2-sulfatoethylsulfonyl)-phenylamino)-1,3,5-triazin-6-yl, 2-(N-Ethyl-3-(2-sulfatoethylsulfonyl)-phenylamino)-4-(4-(2-sulfatoethylsulfonyl)-phenylamino)-1,3,5-triazin-6-yl, 2-(N-Ethyl-3-(2-sulfatoethylsulfonyl)-phenylamino)-4-(3-(2-sulfatoethylsulfonyl)-phenylamino)-1,3,5-triazin-6-yl, 2,4-Di(N-ethyl-4-(2-sulfatoethylsulfonyl)-phenylamino)-1,3,5-triazin-6-yl, 2,4-Di(3-(vinylsulfonyl)-phenylamino)-1,3,5-triazin-6-yl, 2,4-Di(4-(vinylsulfonyl)-phenylamino)-1,3,5-triazin-6-yl, 2-(3-Carboxypyridino)-4-morpholino-1,3,5-triazin-6-yl, 2-(4-Carboxypyridino)-4-(3-sulfophenylamino)-1,3,5-triazin-6-yl, 2-(3-Carbamoylpyridino)-4-(2-sulfophenylamino)-1,3,5-triazin-6-yl, 2-(4-Carbamoylpyridino)-4-(4-(2-sulfatoethylsulfonyl)-phenylamino)-1,3,5-triazin-6-yl, 2,4-Difluor-pyrimidin-6-yl, 4,6-Difluor-pyrimidin-2-yl, 5-Chlor-2,4-difluor-pyrimidin-6-yl, 5-Chlor-4,6-difluor-pyrimidin-2-yl, 4,5-Difluor-pyrimidin-6-yl, 5-Chlor-4-fluor-pyrimidin-6-yl, 2,4,5-Trichlor-pyrimidin-6-yl, 4,5-Dichlor-pyrimidin-6-yl, 2,4-Dichlor-pyrimidin-6-yl, 4-Fluor-pyrimidin-6-yl, 4-Chlor-pyrimidin-6-yl, 2,3-Dichlorchinoxalin-6-carbonyl.

Bevorzugt bedeutet Z²¹ 2,4-Dichlor-1,3,5-triazin-6-yl, 2-Chlor-4-morpholino-1,3,5-triazin-6-yl, 2-Chlor-4-(3-sulfophenylamino)-1,3,5-triazin-6-yl, 2-Chlor-4-(4-sulfophenylamino)-1,3,5-triazin-6-yl, 2-Chlor-4-(3-carboxypyridino)-1,3,5-triazin-6-yl, 2-Chlor-4-(4-carboxypyridino)-1,3,5-triazin-6-yl, 2-Chlor-4-(3-carbamoylpyridino)-1,3,5-triazin-6-yl, 2-Chlor-4-(4-carbamoylpyridino)-1,3,5-triazin-6-yl, 2-Chlor-4-(3-(2-sulfatoethylsulfonyl)-phenylamino)-1,3,5-triazin-6-yl, 2-Chlor-4-(4-(2-sulfatoethylsulfonyl)-phenylamino)-1,3,5-triazin-6-yl, 2-Chlor-4-(3-(vinylsulfonyl)-phenylamino)-1,3,5-triazin-6-yl, 2-Chlor-4-(4-(vinylsulfonyl)-phenylamino)-1,3,5-triazin-6-yl, 2-Chlor-4-(N-methyl-N-(2-(2-sulfatoethylsulfonyl)-ethyl)-amino)-1,3,5-triazin-6-yl, 2-Chlor-4-(N-phenyl-N-(2-(2-sulfatoethylsulfonyl)-ethyl)-amino)-1,3,5-triazin-6-yl, 2-Fluor-4-morpholino-1,3,5-triazin-6-yl, 2-Fluor-4-(2-sulfophenylamino)-1,3,5-triazin-6-yl, 2-Fluor-4-(3-sulfophenylamino)-1,3,5-triazin-6-yl, 2-Fluor-4-(4-sulfophenylamino)-1,3,5-triazin-6-yl, 2-Fluor-4-(3-trimethylammoniumphenylamino)-1,3,5-triazin-6-yl, 2-Fluor-4-(4-trimethylammoniumphenylamino)-1,3,5-triazin-6-yl, 2-Fluor-4-(3-(2-sulfatoethylsulfonyl)-phenylamino)-1,3,5-triazin-6-yl, 2-Fluor-4-(4-(2-sulfatoethylsulfonyl)-phenylamino)-1,3,5-triazin-6-yl, 2-Fluor-4-(3-(vinylsulfonyl)-phenylamino)-1,3,5-triazin-6-yl, 2-Fluor-4-(4-(vinylsulfonyl)-phenylamino)-1,3,5-triazin-6-yl, 2-Fluor-4-(N-methyl-N-(2-(2-sulfatoethylsulfonyl)-ethyl)-amino)-1,3,5-triazin-6-yl, 2-Fluor-4-(N-phenyl-N-(2-(2-sulfatoethylsulfonyl)-ethyl)-amino)-1,3,5-triazin-6-yl, 2,4-Difluor-pyrimidin-6-yl, 4,6-Difluor-pyrimidin-2-yl, 5-Chlor-2,4-difluor-pyrimidin-6-yl, 5-Chlor-4,6-difluor-pyrimidin-2-yl.

Besonders bevorzugt steht Z²¹ für 2,4-Dichlor-1,3,5-triazin-6-yl, 2-Chlor-4-(3-sulfophenylamino)-1,3,5-triazin-6-yl, 2-Chlor-4-(4-sulfophenylamino)-1,3,5-triazin-6-yl, 2-Chlor-4-(3-(2-sulfatoethylsulfonyl)-phenylamino)-1,3,5-triazin-6-yl, 2-Chlor-4-(4-(2-sulfatoethylsulfonyl)-phenylamino)-1,3,5-triazin-6-yl, 2-Chlor-4-(3-(vinylsulfonyl)-phenylamino)-1,3,5-triazin-6-yl, 2-Chlor-4-(4-(vinylsulfonyl)-phenylamino)-1,3,5-triazin-6-yl, 2-Fluor-4-(2-sulfophenylamino)-1,3,5-triazin-6-yl, 2-Fluor-4-(3-sulfophenylamino)-1,3,5-triazin-6-yl, 2-Fluor-4-(4-sulfophenylamino)-1,3,5-triazin-6-yl, 2-Fluor-4-(3-trimethylammoniumphenylamino)-1,3,5-triazin-6-yl, 2-Fluor-4-(4-trimethylammoniumphenylamino)-1,3,5-triazin-6-yl, 2-Fluor-4-(3-(2-sulfatoethylsulfonyl)-phenylamino)-1,3,5-triazin-6-yl, 2-Fluor-4-(4-(2-sulfatoethylsulfonyl)-phenylamino)-1,3,5-triazin-6-yl, 2-Fluor-4-(3-(vinylsulfonyl)-phenylamino)-1,3,5-triazin-6-yl, 2-Fluor-4-(4-(vinylsulfonyl)-phenylamino)-1,3,5-triazin-6-yl, 2,4-Difluor-pyrimidin-6-yl, 5-Chlor-2,4-difluor-pyrimidin-6-yl.

In der allgemeinen Formel (II) steht im Falle, daß D³ oder D⁴ für eine Gruppe der allgemeinen Formel (6) stehen, die Bindung, die zur Diazogruppe führt, bevorzugt in β-Stellung an den Naphthalinkern gebunden.
Im Falle, daß D³ oder D⁴ für eine Gruppe der allgemeinen Formel (5) und X² für -SO₂Z stehen, steht die SO₂Z-Gruppe bevorzugt in meta- oder para-Stellung zur Diazogruppe. Im Falle, daß D³ oder D⁴ für eine Gruppe der allgemeinen Formel (8) stehen, steht die quarternäre Ammoniumgruppe bevorzugt in meta- oder para-Stellung zur Diazogruppe.

In der allgemeinen Formel (III) bedeuten R³¹ bis R³³ bevorzugt Wasserstoff oder Methyl, R³¹ bedeutet außerdem bevorzugt auch Ureido, R³² Acetylamino oder Ureido und R³³ Methoxy.

Z³¹ ist bevorzugt 2,4-Dichlor-1,3,5-triazin-6-yl, 2-Chlor-4-(3-carboxypyridino)-1,3,5-triazin-6-yl, 2-Chlor-4-(4-carboxypyridino)-1,3,5-triazin-6-yl, 2-Chlor-4-(3-carbamoylpyridino)-1,3,5-triazin-6-yl, 2-Chlor-4-(4-carbamoylpyridino)-1,3,5-triazin-6-yl, 2-Chlor-4-(3-(2-sulfatoethylsulfonyl)-phenylamino)-1,3,5-triazin-6-yl, 2-Chlor-4-(4-(2-sulfatoethylsulfonyl)-phenylamino)-1,3,5-triazin-6-yl, 2-Chlor-4-(3-(vinylsulfonyl)-phenylamino)-1,3,5-triazin-6-yl, 2-Chlor-4-(4-(vinylsulfonyl)-phenylamino)-1-,3,5-triazin-6-yl, 2-Chlor-4-(4-(3-(2-sulfatoethylsulfonyl)-phenylcarbamoyl)-phenylamino)-1,3,5-triazin-6-yl, 2-Chlor-4-(4-(4-(2-sulfatoethylsulfonyl)-phenylcarbamoyl)-phenylamino)-1,3,5-triazin-6-yl, 2-Chlor-4-(3-(3-(2-sulfatoethylsulfonyl)-phenylcarbamoyl)-phenylamino)-1,3,5-triazin-6-yl, 2-Chlor-4-(3-(4-(2-sulfatoethylsulfonyl)-phenylcarbamoyl)-phenylamino)-1,3,5-triazin-6-yl, 2-Chlor-4-(N-methyl-N-(2-(2-sulfatoethylsulfonyl)-ethyl)-amino)-1,3,5-triazin-6-yl, 2-Chlor-4-(N-phenyl-N-(2-(2-sulfatoethylsulfonyl)-ethyl)-amino)-1,3,5-triazin-6-yl, 2-Fluor-4-morpholino-1,3,5-triazin-6-yl, 2-Fluor-4-(2-sulfophenylamino)-1,3,5-triazin-6-yl, 2-Fluor-4-(3-sulfophenylamino)-1,3,5-triazin-6-yl, 2-Fluor-4-(4-sulfophenylamino)-1,3,5-triazin-6-yl, 2-Fluor-4-(3-trimethylammoniumphenylamino)-1,3,5-triazin-6-yl, 2-Fluor-4-(4-trimethylammoniumphenylamino)-1,3,5-triazin-6-yl, 2-Fluor-4-(3-(2-sulfatoethylsulfonyl)-phenylamino)-1,3,5-triazin-6-yl, 2-Fluor-4-(4-(2-Sulfatoethylsulfonyl)-phenylamino)-1,3,5-triazin-6-yl, 2-Fluor-4-(3-(vinylsulfonyl)-phenylamino)-1,3,5-triazin-6-yl, 2-Fluor-4-(4-(vinylsulfonyl)-phenylamino)-1,3,5-triazin-6-yl, 2-Fluor-4-(4-(3-(2-sulfatoethylsulfonyl)-phenylcarbamoyl)-phenylamino)-1,3,5-triazin-6-yl, 2-Fluor-4-(4-(4-(2-sulfatoethylsulfonyl)-phenylcarbamoyl)-phenylamino)-1,3,5-triazin-6-yl, 2-Fluor-4-(3-(3-(2-sulfatoethylsulfonyl)-phenylcarbamoyl)-phenylamino)-1,3,5-triazin-6-yl, 2-Fluor-4-(3-(4-(2-sulfatoethylsulfonyl)-phenylcarbamoyl)-phenylamino)-1,3,5-triazin-6-yl, 2-Fluor-4-(N-methyl-N-(2-(2-sulfatoethylsulfonyl)-ethyl)-amino)-1,3,5-triazin-6-yl, 2-Fluor-4-(N-phenyl-N-(2-(2-sulfatoethylsulfonyl)-ethyl)-amino)-1,3,5-triazin-6-yl, 2,4-Difluor-pyrimidin-6-yl, 4,6-Difluor-pyrimidin-2-yl, 5-Chlor-2,4-difluor-pyrimidin-6-yl, 5-Chlor-4,6-difluor-pyrimidin-2-yl, 2,3-Dichlorchinoxalin-6-carbonyl.

Ganz besonders bevorzugt ist Z³¹ 2,4-Dichlor-1,3,5-triazin-6-yl, 2-Chlor-4-(3-(2-sulfatoethylsulfonyl)-phenylamino)-1,3,5-triazin-6-yl, 2-Chlor-4-(4-(2-sulfatoethylsulfonyl)-phenylamino)-1,3,5-triazin-6-yl, 2-Chlor-4-(3-(vinylsulfonyl)-phenylamino)-1,3,5-triazin-6-yl, 2-Chlor-4-(4-(vinylsulfonyl)-phenylamino)-1,3,5-triazin-6-yl, 2-Chlor-4-(N-methyl-N-(2-(2-sulfatoethylsulfonyl)-ethyl)-amino)-1,3,5-triazin-6-yl, 2-Chlor-4-(N-phenyl-N-(2-(2-sulfatoethylsulfonyl)-ethyl)-amino)-1,3,5-triazin-6-yl, 2-Fluor-4-morpholino-1,3,5-triazin-6-yl, 2-Fluor-4-(2-sulfophenylamino)-1,3,5-triazin-6-yl, 2-Fluor-4-(3-sulfophenylamino)-1,3,5-triazin-6-yl, 2-Fluoro-4-(4-sulfophenylamino)-1,3,5-triazin-6-yl, 2-Fluor-4-(3-trimethylammoniumphenylamino)-1,3,5-triazin-6-yl, 2-Fluor-4-(4-trimethylammoniumphenylamino)-1,3,5-triazin-6-yl, 2-Fluor-4-(3-(2-sulfatoethylsulfonyl)-phenylamino)-1,3,5-triazin-6-yl, 2-Fluor-4-(4-(2-sulfatoethylsulfonyl)-phenylamino)-1,3,5-triazin-6-yl, 2-Fluor-4-(3-(vinylsulfonyl)-phenylamino)-1,3,5-triazin-6-yl, 2-Fluor-4-(4-(vinylsulfonyl)-phenylamino)-1,3,5-triazin-6-yl, 2-Fluor-4-(N-methyl-N-(2-(2-sulfatoethylsulfonyl)-ethyl)-amino)-1,3,5-triazin-6-yl, 2-Fluor-4-(N-phenyl-N-(2-(2-sulfatoethylsulfonyl)-ethyl)-amino)-1,3,5-triazin-6-yl, 2,4-Difluoro-pyrimidin-6-yl, 4,6-Difluor-pyrimidin-2-yl, 5-Chlor-2,4-difluor-pyrimidin-6-yl, 5-Chlor-4,6-difluor-pyrimidin-2-yl, 2,3-Dichlorchinoxalin-6-carbonyl.

Bevorzugte Mischungen enthalten einen oder mehrere Farbstoffe der allgemeinen Formel (Ia) 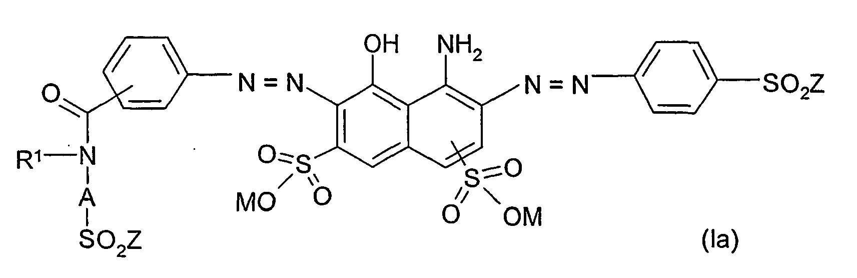 einen oder mehrere Farbstoffe der allgemeinen Formel (IIa) 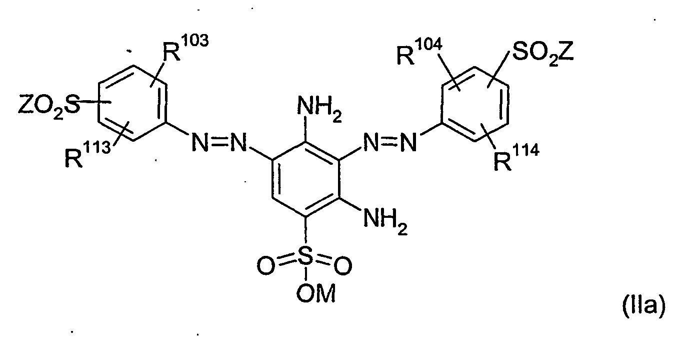 oder einen oder mehrere Farbstoffe der allgemeinen Formel (IIIa)

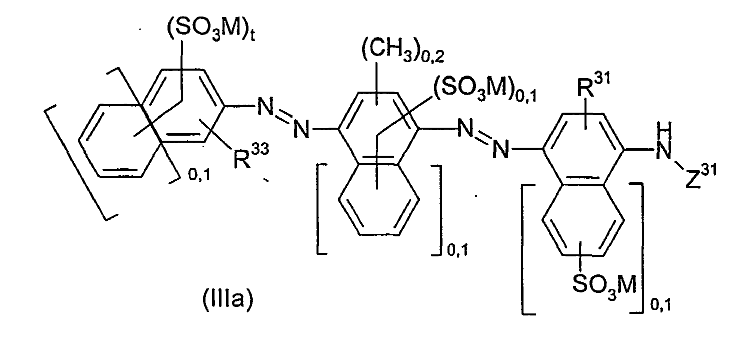

In den allgemeinen Formeln (la) bis (IIIa) haben M, A, R¹, Z, R³¹, R³³, Z³¹ und t die obengenannte Bedeutung.

In der allgemeinen Formel (Ia) steht besonders bevorzugt A für Phenylen und Z für Vinyl oder β-Sulfatoethyl, ganz besonders bevorzugt in Formel (la) ist A Phenylen, R¹ Wasserstoff und Z Vinyl oder β-Sulfatoethyl.

In der allgemeinen Formel (IIa) sind R¹⁰³, R¹¹³, R¹⁰⁴, R¹¹⁴ unabhängig voneinander Wasserstoff, Methyl, Methoxy, Sulfo, Carboxy oder Halogen, besonders bevorzugt sind R¹⁰³, R¹¹³, R¹⁰⁴, R¹¹⁴ Wasserstoff, Methyl, Methoxy oder Sulfo.

Die erfindungsgemäßen Farbstoffmischungen enthalten Bisazofarbstoffe der allgemeinen Formel (I) in einer Menge von 30 bis 95 Gew-%, bevorzugt 50 bis 90 Gew-% und Bisazofarbstoffe der allgemeinen Formel (II) oder (III) in einer Menge von 5 bis 70 Gew-%, bevorzugt 10 bis 50 Gew-%.

Optional können die erfindungsgemäßen Farbstoffmischungen außerdem einen oder mehrere Monoazofarbstoffe der allgemeinen Formeln (14) oder (15) in einer Menge mit jeweils 0.5 bis 6 Gew.- % bzw. bis zu 10 Gew % enthalten, 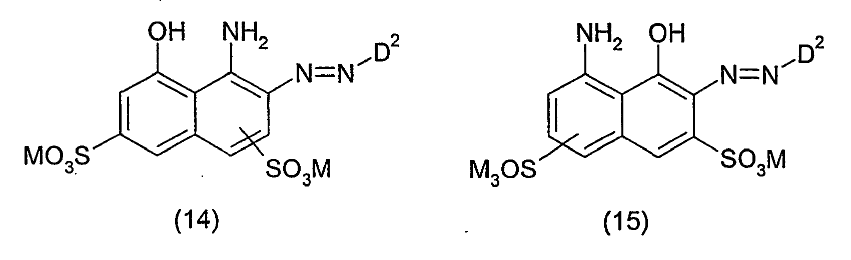 worin M und D² die obengenannten Bedeutungen haben. Besonders bevorzugt ist D² 4-(2-Sulfatoethylsulfonyl)-phenyl oder 4-Vinylsulfonyl-phenyl.

Die erfindungsgemäßen Farbstoffmischungen können als Präparation in fester oder in flüssiger (gelöster) Form vorliegen. In fester Form enthalten sie, so weit erforderlich, die bei wasserlöslichen und insbesondere faserreaktiven Farbstoffen üblichen Elektrolytsalze, wie Natriumchlorid, Kaliumchlorid und Natriumsulfat, und können des weiteren die in Handelsfarbstoffen üblichen Hilfsmittel enthalten, wie Puffersubstanzen, die einen pH-Wert in wäßriger Lösung zwischen 3 und 7 einzustellen vermögen, wie beispielsweise Natriumacetat, Natriumcitrat, Natriumborat, Natriumhydrogencarbonat, Natriumdihydrogenphosphat und Dinatriumhydrogenphosphat, außerdem Färbehilfsmittel, Entstaubungsmittel und geringe Mengen an Sikkativen; falls sie in flüssiger, wäßriger Lösung (einschließlich des Gehaltes von Verdickungsmitteln, wie sie bei Druckpasten üblich sind) vorliegen, können sie auch Substanzen enthalten, die die Haltbarkeit dieser Präparationen gewährleisten, wie beispielsweise schimmelverhütende Mittel.

In fester Form liegen die erfindungsgemäßen Farbstoffmischungen im allgemeinen als elektrolytsalzhaltige Pulver oder Granulate (im nachfolgenden allgemein als Präparation bezeichnet) mit gegebenenfalls einem oder mehreren der obengenannten Hilfsmittel vor. In den Präparationen ist die Farbstoffmischung zu 20 bis 90 Gew.-%, bezogen auf die enthaltene Präparation, enthalten. Die Puffersubstanzen liegen in der Regel in einer Gesamtmenge von bis zu 10 Gew.-%, bezogen auf die Präparation, vor.

Sofern die erfindungsgemäßen Farbstoffmischungen in wäßriger Lösung vorliegen, beträgt der Gesamtfarbstoffgehalt in diesen wäßrigen Lösungen bis zu etwa 50 Gew.-%, wie beispielsweise zwischen 5 und 50 Gew.-%, wobei der Elektrolytsalzgehalt in diesen wäßrigen Lösungen bevorzugt unterhalb 10 Gew.-%, bezogen auf die wäßrige Lösung, beträgt; die wäßrigen Lösungen (Flüssigpräparationen) können die erwähnten Puffersubstanzen in der Regel in einer Menge von bis zu 5 Gew.-%, bevorzugt bis zu 2 Gew.-%, enthalten.

Farbstoffe der allgemeinen Formel (I) sind aus der EP-A-1 046 677 bekannt, Farbstoffe der allgemeinen Formel (II) sind aus EP-A-0 785 237 und Farbstoffe der allgemeinen Formel (III) sind aus US-3 950 128, A, EP-A-0 042 108, EP-A-0 202 570, DE-A-0303081, EP-A- 0 042 108 A, DE-A- 3 517 366, GB 1 102 204, EP-A- 0 319 845 A, EP-A-0575909, DE-A- 2 733 109, DE-A- 2 804 248, EP-A-0601361 bekannt. Farbstoffe der allgemeinen Formeln (14) und (15) sind über Standardsynthesemethoden zugänglich oder werden teilweise während der Synthese von Farbstoffen der allgemeinen Formel (I) gebildet. Sie werden üblicherweise als Nuancierkomponenten eingesetzt.

Die erfindungsgemäßen Farbstoffmischungen lassen sich in an und für sich üblicher Verfahrensweise herstellen, wie durch mechanisches Vermischen der Einzelfarbstoffe, sei es in Form von Farbstoffpulvern oder -granulaten oder deren Syntheselösungen oder von wäßrigen Lösungen der Einzelfarbstoffe generell, welche noch übliche Hilfsmittel enthalten können oder durch dem Fachmann geläufige Diazotierung und Kupplung geeigneter Mischungen von Diazo- und Kupplungskomponenten in den gewünschten Mengenverhältnissen. Beispielsweise kann, wenn die Gruppen D¹ und D⁴ gemäß der allgemeinen Formel (I) und (II) gleiche Bedeutung haben, ein Amin der allgemeinen Formel (16)

D¹-NH₂ (16)

worin D¹ wie bereits angegeben definiert ist, in üblicher Weise diazotiert und die erhaltene Diazoniumverbindung anschließend mit einer wässrigen Lösung oder Suspension einer Mischung mit festgelegtem Verhältnis eines Monoazofarbstoffs gemäß der allgemeinen Formel (14) und eines Monoazofarbstoffs gemäß der allgemeinen Formel (17) 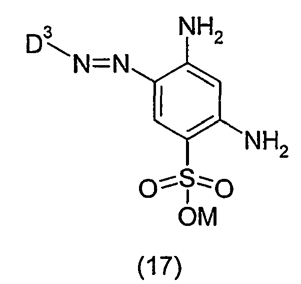 worin D², D³ und M wie in Anspruch 1 angegeben definiert sind, bei einem pH-Wert zwischen 4 und 8, umgesetzt werden.

Alternativ kann die erfindungsgemäße Farbstoffmischung für den Fall, dass die Gruppen D² und D³ sowie D¹ und D⁴ gemäß den allgemeinen Formeln (I) und (II) gleiche Bedeutung besitzen (D² = D³ und D¹ = D⁴), hergestellt werden, indem man ein Amin der allgemeinen Formel (18), worin D² wie oben angegeben definiert ist, in üblicher Weise diazotiert und auf eine Mischung der Kupplungskomponenten bei einem pH-Wert unterhalb von 2 in erster Stufe kuppelt und anschließend ein Amin der allgemeinen Formel (16), diazotiert und mit der in erster Stufe erhaltenen Mischung der Monoazofarbstoffe der allgemeinen Formeln (14) und (17) bei einem pH-Wert zwischen 4 und 8 kuppelt

Die erfindungsgemäße Farbstoffmischung wird in an und für sich bekannter Weise durch Aussalzen beispielsweise mit Kochsalz oder Kaliumchlorid oder durch Sprühtrocknung isoliert.

Farbstoffmischungen die neben β-Chloroethylsulfonyl oder β-Thiosulfatoethylsulfonyl oder β-Sulfatoethylsulfonyl-Gruppen auch Vinylsulfonylgruppen als reaktive Reste haben, können nicht nur ausgehend von entsprechend substituierten Vinylsulfonyl-Anilinen oder Naphthylaminen synthetisiert werden, sondern auch durch Umsetzung einer Farbstoffmischung, worin Z für β-Chloroethyl, β-Thiosulfatoethyl, oder β-Sulfatoethyl steht, mit einer für den gewünschten Anteil erforderlichen Menge an Alkali und Überführung der genannten β-substituierten Ethylsulfonylgruppen in Vinylsulfonylgruppen, erhalten werden. Diese Überführung erfolgt in einer dem Fachmann geläufigen Art und Weise.

Die erfindungsgemäßen Farbstoffmischungen besitzen wertvolle anwendungstechnische Eigenschaften. Sie werden zum Färben oder Bedrucken von hydroxy- und/oder carbonamidgruppenhaltigen Materialien, beispielsweise in Form von Flächengebilden, wie Papier und Leder oder von Folien, wie beispielsweise aus Polyamid, oder in der Masse, wie beispielsweise von Polyamid und Polyurethan, insbesondere aber von diesen Materialien in Faserform verwendet. Auch können die bei der Synthese anfallenden Lösungen der erfindungsgemäßen Farbstoffmischungen, gegebenenfalls nach Zusatz einer Puffersubstanz, gegebenenfalls auch nach Aufkonzentrieren oder Verdünnen, direkt als Flüssigpräparation der färberischen Verwendung zugeführt werden.

Die vorliegende Erfindung betrifft somit auch die Verwendung der erfindungsgemäßen Farbstoffmischungen zum Färben oder Bedrucken dieser Materialien bzw. Verfahren zum Färben oder Bedrucken solcher Materialien in an und für sich üblichen Verfahrensweisen, bei welchen man eine erfindungsgemäße Farbstoffmischung oder deren Einzelkomponenten (Farbstoffe) einzeln zusammen als Farbmittel einsetzt. Bevorzugt kommen die Materialien in Form von Fasermaterialien zur Anwendung, insbesondere in Form von Textilfasern, wie Geweben oder Garnen, wie in Form von Strängen oder Wickelkörpern.

Hydroxygruppenhaltige Materialien sind solche natürlichen oder synthetischen Ursprungs, wie beispielsweise Cellulosefasermaterialien oder deren Regeneratprodukte und Polyvinylalkohole. Cellulosefasermaterialien sind vorzugsweise Baumwolle, aber auch andere Pflanzenfasern, wie Leinen, Hanf, Jute und Ramiefasern; regenerierte Cellulosefasern sind beispielsweise Zellwolle und Viskosekunstseide sowie chemisch modifizierte Cellulosefasern, wie aminierte Cellulosefasern oder Fasern, wie sie bspw. in WO 96/37641 und WO 96/37642 sowie in EP-A-0 538 785 und EP-A-0 692 559 beschrieben sind.

Carbonamidgruppenhaltige Materialien sind beispielsweise synthetische und natürliche Polyamide und Polyurethane, insbesondere in Form von Fasern, beispielsweise Wolle und andere Tierhaare, Seide, Leder, Polyamid-6,6, Polyamid-6, Polyamid-11 und Polyamid-4.

Die erfindungsgemäßen Farbstoffmischungen lassen sich auf den genannten Substraten, insbesondere auf den genannten Fasermaterialien, nach den für wasserlösliche, insbesondere nach den für faserreaktive Farbstoffe bekannten Anwendungstechniken applizieren und fixieren. So erhält man mit ihnen auf Cellulosefasern nach den Ausziehverfahren sowohl aus kurzer als auch aus langer Flotte, bspw. im Verhältnis Ware zu Flotte von 1 : 5 bis 1 : 100, bevorzugt 1 : 6 bis 1 : 30, unter Verwendung von verschiedensten säurebindenden Mitteln und gegebenenfalls neutralen Salzen soweit erforderlich, wie Natriumchlorid oder Natriumsulfat, Färbungen mit sehr guten Farbausbeuten. Man färbt bevorzugt in wäßrigem Bad bei Temperaturen zwischen 40 und 105°C, gegebenenfalls bei einer Temperatur bis zu 130°C unter Druck, bevorzugt jedoch bei 30 bis 95°C, insbesondere 45 bis 65°C, und gegebenenfalls in Gegenwart von üblichen Färbereihilfsmitteln. Man kann dabei so vorgehen, daß man das Material in das Bad einbringt und dieses allmählich auf die gewünschte Färbetemperatur erwärmt und den Färbeprozeß bei dieser Temperatur zu Ende führt. Die das Ausziehen der Farbstoffe beschleunigenden Neutralsalze können dem Bade gewünschtenfalls auch erst nach Erreichen der eigentlichen Färbetemperatur zugesetzt werden.

Nach den Klotzverfahren werden auf Cellulosefasern ebenfalls ausgezeichnete Farbausbeuten und ein sehr guter Farbaufbau erhalten, wobei durch Verweilen bei Raumtemperatur oder erhöhter Temperatur, beispielsweise bis zu etwa 60°C, oder in kontinuierlicher Färbeweise, bspw. mittels eines Pad-Dry-Pad-Steam-Verfahrens, durch Dämpfen oder mit Trockenhitze in üblicher Weise fixiert werden kann.

Ebenfalls nach den üblichen Druckverfahren für Cellulosefasern, die einphasig, beispielsweise durch Bedrucken mit einer Natriumbicarbonat oder ein anderes säurebindendes Mittel enthaltenden Druckpaste und anschließendes Dämpfen bei 100 bis 103°C, oder zweiphasig, beispielsweise durch Bedrucken mit neutraler oder schwach saurer Druckfarbe und anschließendem Fixieren entweder durch Hindurchführen durch ein heißes elektrolythaltiges alkalisches Bad oder durch Überklotzen mit einer alkalischen elektrolythaltigen Klotzflotte und anschließendem Verweilen oder Dämpfen oder Behandlung mit Trockenhitze des alkalisch überklotzten Materials, durchgeführt werden können, erhält man farbstarke Drucke mit gutem Stand der Konturen und einem klaren Weißfond. Der Ausfall der Drucke ist von wechselnden Fixierbedingungen nur wenig abhängig.

Bei der Fixierung mittels Trockenhitze nach den üblichen Thermofixierverfahren verwendet man Heißluft von 120 bis 200°C. Neben dem üblichen Wasserdampf von 101 bis 103°C kann auch überhitzter Dampf und Druckdampf von Temperaturen bis zu 160°C eingesetzt werden.

Die säurebindenden und die Fixierung der Farbstoffe der erfindungsgemäßen Farbstoffmischungen auf den Cellulosefasern bewirkenden Mittel sind beispielsweise wasserlösliche basische Salze der Alkalimetalle und ebenfalls Erdalkalimetalle von anorganischen oder organischen Säuren oder Verbindungen, die in der Hitze Alkali freisetzen, des weiteren Alkalisilicate. Insbesondere sind die Alkalimetallhydroxide und Alkalimetallsalze von schwachen bis mittelstarken anorganischen oder organischen Säuren zu nennen, wobei von den Alkaliverbindungen vorzugsweise die Natrium- und Kaliumverbindungen gemeint sind. Solche säurebindenden Mittel sind beispielsweise Natriumhydroxid, Kaliumhydroxid, Natriumcarbonat, Natriumbicarbonat, Kaliumcarbonat, Natriumformiat, Natriumdihydrogenphosphat, Dinatriumhydrogenphosphat, Natriumtrichloracetat, Trinatriumphosphat oder Wasserglas oder Mischungen derselben, wie beispielsweise Mischungen aus Natronlauge und Wasserglas.

Die erfindungsgemäßen Farbstoffmischungen zeichnen sich auf den Cellulosefasermaterialien bei Anwendung in den Färbe- und Druckverfahren durch eine hervorragende Farbstärke in Gegenwart keiner oder nur sehr geringer Alkali-oder Erdalkaliverbindungen aus. So benötigt man beispielsweise für eine geringe Farbtiefe kein Elektrolytsalz, für eine mittlere Farbtiefe nicht mehr als 5g/l an Elektrolytsalz und für große Farbtiefen nicht mehr als 10 g/l an Elektrolytsalz.

Eine geringe Farbtiefe bezeichnet erfindungsgemäß den Einsatz von 2 Gew-% Farbstoff bezogen auf das zu färbende Substrat, eine mittlere Farbtiefe bezeichnet erfindungsgemäß den Einsatz von 2 bis 4 Gew-% Farbstoff bezogen auf das zu färbende Substrat und eine große Farbtiefe bezeichnet erfindungsgemäß den Einsatz von 4 bis 10-Gew % Farbstoff bezogen auf das zu färbende Substrat.

Die mit den erfindungsgemäßen Farbstoffmischungen erhältlichen Färbungen und Drucke besitzen klare Nuancen; insbesondere weisen die Färbungen und Drucke auf Cellulosefasermaterialien eine gute Lichtechtheit und insbesondere gute Naßechtheiten, wie Wasch-, Walk-, Wasser-, Seewasser-, Überfärbe- und saure sowie alkalische Schweißechtheiten, desweiteren eine gute Plissierechtheit, Bügelechtheit und Reibechtheit auf. Weiterhin zeigen die Cellulosefärbungen nach der üblichen Nachbehandlung durch Spülen zur Entfernung von nicht fixierten Farbstoffanteilen ausgezeichnete Naßechtheiten, zumal sich nicht fixierte Farbstoffanteile wegen ihrer guten Kaltwasserlöslichkeit leicht auswaschen lassen.

Des weiteren können die erfindungsgemäßen Farbstoffmischungen auch für das faserreaktive Färben von Wolle Verwendung finden. Auch läßt sich filzfrei oder filzarm ausgerüstete Wolle (vgl. bspw. H. Rath, Lehrbuch der Textilchemie, Springer-Verlag, 3. Auflage (1972), S. 295-299, insbesondere die Ausrüstung nach dem sogenannten Hercosett-Verfahren (S. 298); J. Soc. Dyers and Colorists 1972, 93-99, und 1975, 33-44) mit sehr guten Echtheitseigenschaften färben. Das Verfahren des Färbens auf Wolle erfolgt hierbei in üblicher und bekannter Färbeweise aus saurem Milieu. So kann man beispielsweise dem Färbebad Essigsäure und/oder Ammoniumsulfat oder Essigsäure und Ammoniumacetat oder Natriumacetat zufügen, um den gewünschten pH-Wert zu erhalten. Um eine brauchbare Egalität der Färbung zu erreichen, empfiehlt sich ein Zusatz an üblichen Egalisierhilfsmitteln, wie beispielsweise auf Basis eines Umsetzungsproduktes von Cyanurchlorid mit der dreifach molaren Menge einer Aminobenzolsulfonsäure und/oder einer Aminonaphthalinsulfonsäure oder auf Basis eines Umsetzungsproduktes von beispielsweise Stearylamin mit Ethylenoxid. So wird beispielsweise die erfindungsgemäße Farbstoffmischung bevorzugt zunächst aus saurem Färbebad mit einem pH von etwa 3,5 bis 5,5 unter Kontrolle des pH-Wertes dem Ausziehprozeß unterworfen und der pH-Wert sodann, gegen Ende der Färbezeit, in den neutralen und gegebenenfalls schwach alkalischen Bereich bis zu einem pH-Wert von 8,5 verschoben, um besonders zur Erzielung von hohen Farbtiefen die volle reaktive Bindung zwischen den Farbstoffen der erfindungsgemäßen Farbstoffmischungen und der Faser herbeizuführen. Gleichzeitig wird der nicht reaktiv gebundene Farbstoffanteil abgelöst.

Die hier beschriebene Verfahrensweise gilt auch zur Herstellung von Färbungen auf Fasermaterialien aus anderen natürlichen Polyamiden oder aus synthetischen Polyamiden und Polyurethanen. In der Regel wird das zu färbende Material bei einer Temperatur von etwa 40°C in das Bad eingebracht, dort einige Zeit darin bewegt, das Färbebad dann auf den gewünschten schwach sauren, vorzugsweise schwach essigsauren, pH-Wert nachgestellt und die eigentliche Färbung bei einer Temperatur zwischen 60 und 98°C durchgeführt. Die Färbungen können aber auch bei Siedetemperatur oder in geschlossenen Färbeapparaturen bei Temperaturen bis zu 106°C ausgeführt werden. Da die Wasserlöslichkeit der erfindungsgemäßen Farbstoffmischungen sehr gut ist, lassen sie sich auch mit Vorteil bei üblichen kontinuierlichen Färbeverfahren einsetzen. Die Farbstärke der erfindungsgemäßen Farbstoffmischungen ist sehr hoch.

Die erfindungsgemäßen Farbstoffmischungen liefern auf den genannten Materialien, bevorzugt Fasermaterialien, marineblaue bis tiefschwarze Färbungen mit guten Echtheitseigenschaften.

Die nachstehenden Beispiele dienen zur Erläuterung der Erfindung. Die Teile sind Gewichtsteile, die Prozentangaben stellen Gewichtsprozente dar, sofern nicht anders vermerkt. Gewichtsteile beziehen sich zu Volumenteilen wie Kilogramm zu Liter. Die in den Beispielen formelmäßig beschriebenen Verbindungen sind in Form der Natriumsalze geschrieben, da sie im allgemeinen in Form ihrer Salze, vorzugsweise Lithium-, Natrium- oder Kaliumsalze, hergestellt und isoliert und in Form ihrer Salze zum Färben verwendet werden. Die in den nachfolgenden Beispielen, insbesondere Tabellenbeispielen, genannten Ausgangsverbindungen können in Form der freien Säure oder ebenso in Form ihrer Salze, vorzugsweise Alkalimetallsalze, wie Natrium-oder Kaliumsalze, in die Synthese eingesetzt werden.

### Beispiel 1

85 Teile eines elektrolythaltigen Farbstoffpulvers, das den marineblauen Disazofarbstoff der Formel (IA) 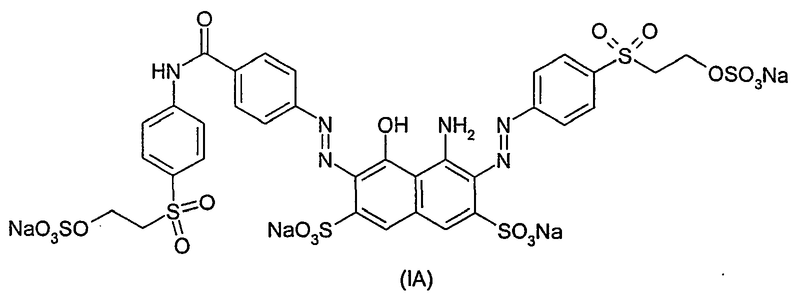 in 70%-igem Anteil enthält und 15 Teile eines elektrolythaltigen Farbstoffpulvers, das den orangefarbenen Disazofarbstoff der Formel (IIA) in 75%-igem Anteil enthält, werden mechanisch miteinander gemischt.

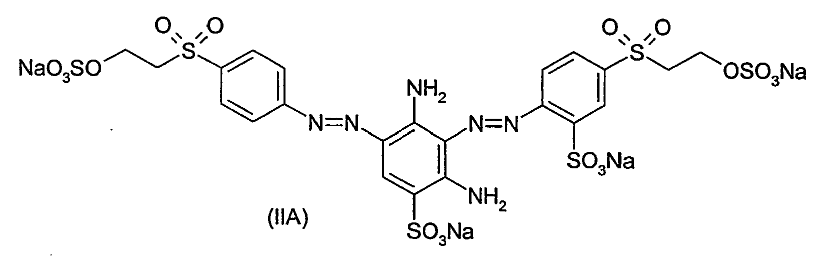

Die resultierende, erfindungsgemäße Farbstoffmischung liefert unter den für Reaktivfarbstoffe üblichen Färbebedingungen, beispielsweise auf Baumwolle, tiefschwarze Färbungen und Drucke.

### Beispiel 2

a) 281 Teile 4-(β-Sulfatoethylsulfonyl)-anilin werden in 650 Teilen Eiswasser und 180 Teilen 30%-iger Salzsäure suspendiert und durch Zutropfen von 173 Teilen 40%-iger Natriumnitritlösung diazotiert. Hierzu gibt man 319 Teile 1-Amino-8-naphthol-3,6-disulfonsäure und kuppelt in erster Stufe bei pH 1 bis 1.3 unterhalb 20°C zu einem roten Monoazofarbstoff gemäß allgemeiner Formel (14). Der angegebene pH-Bereich wird dabei durch Zusatz von insgesamt etwa 140 Teilen Natriumhydrogencarbonat eingestellt und während der Kupplungsreaktion gehalten.
b) In einem zweiten, separaten Reaktionsgefäß werden 500 Teile 4-Amino-N-(3-((β-sulfatoethyl)-sulfonyl)-phenyl)-benzamid in 2750 Teilen Eiswasser suspendiert, mit etwa 90 Teilen Natriumcarbonat auf pH 6.5 - 7 eingestellt und mit 217 Teilen 40%-iger Natriumnitritlösung versetzt. Diese Suspension tropft man zu einer Mischung aus 780 Teilen Eis, 630 Teilen Eiswasser und 450 Teilen konzentrierter Salzsäure. Nach 2-stündiger Nachrührzeit bei 5-10°C wird der Nitritüberschuß mit Amidosulfonsäure zurückgenommen und die erhaltene Diazo-Suspension zur Lösung des roten Monoazofarbstoffs aus a) gepumpt. Daraufhin setzt man diesem Reaktionsgemisch 156.5 Teile des gelben Monoazofarbstoffs der Formel (17A), der durch Diazotierung von 90.5 Teilen 4-(β-Sulfatoethylsulfonyl)-2-sulfo-anilin und anschließende Kupplung auf 47 Teile 2,4-Diaminobenzolsulfonsäure bei pH 1,2 -2 erhalten wurde, hinzu.

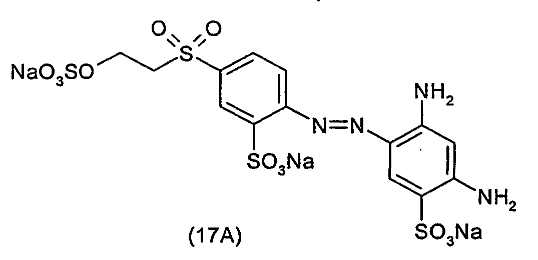

Anschließend wird unterhalb 25°C mit Natriumcarbonat pH 5 - 6 eingestellt und die nach beendeter Kupplungsreaktion entstandene 80 : 20 - Mischung der Farbstoffe (IB) und (IIB) durch Sprühtrocknung isoliert.
Alternativ kann die erhaltene Farbstofflösung auch durch Zusatz eines PhosphatPuffers bei pH 5.5 - 6 gepuffert und durch weitere Verdünnung bzw. Konzentration als Flüssigmarke bestimmter Stärke eingestellt werden.
Die erhaltene, erfindungsgemäße Farbstoffmischung färbt Baumwolle in schwarzen Tönen.

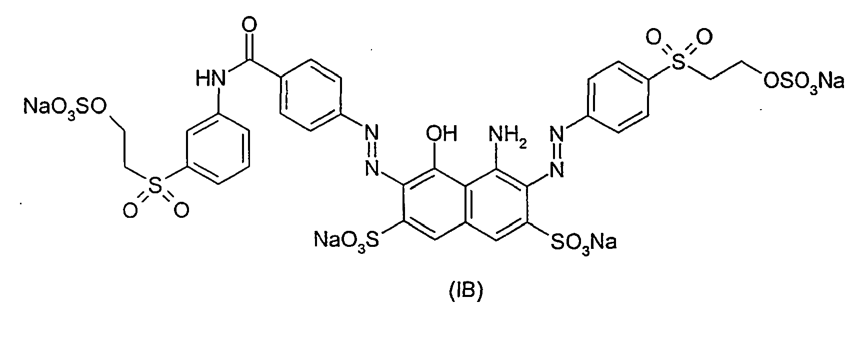

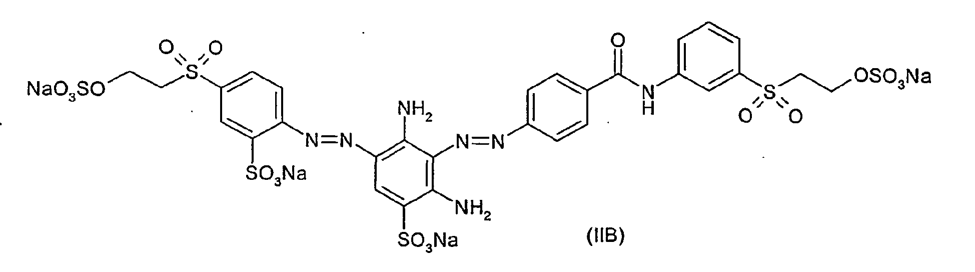

### Beispiel 3

a) 281 Teile 4-(β-Sulfatoethylsulfonyl)-anilin werden in 650 Teilen Eiswasser und 180 Teilen 30%-iger Salzsäure suspendiert und durch Zutropfen von 173 Teilen 40%-iger Natriumnitritlösung diazotiert. Hierzu gibt man 271 Teile 1-Amino-8-naphthol-3,6-disulfonsäure und 28 Teile 2,4-Diamino-benzolsulfonsäure und kuppelt in erster Stufe bei pH 1 bis 1.5 unterhalb 20°C zu einer Mischung aus einem roten und einem gelben Monoazofarbstoff gemäß den allgemeinen Formeln (14) und (17). Der angegebene pH-Bereich wird dabei durch Zusatz von insgesamt etwa 145 Teilen Natriumhydrogencarbonat eingestellt und während der Kupplungsreaktion gehalten.
b) In einem zweiten, separaten Reaktionsgefäß werden 400 Teile 4-Amino-N-(3-((β-sulfatoethyl)-sulfonyl)-phenyl)-benzamid in 2250 Teilen Eiswasser suspendiert, mit etwa 72 Teilen Natriumcarbonat auf pH 6.5 - 7 eingestellt und mit 174 Teilen 40%-iger Natriumnitritlösung versetzt. Diese Suspension tropft man zu einer Mischung aus 625 Teilen Eis, 510 Teilen Eiswasser und 360 Teilen konzentrierter Salzsäure. Nach 2-stündiger Nachrührzeit bei 5-10°C wird der Nitritüberschuß mit Amidosulfonsäure zurückgenommen und die erhaltene Diazo-Suspension zur Lösung der beiden Monoazofarbstoffe aus a) gepumpt.
   Anschließend wird unterhalb 25°C mit Natriumcarbonat pH 5 - 6 eingestellt und die nach beendeter Kupplungsreaktion entstandene 87 : 13 - Mischung der Farbstoffe (IB) und (IIDH) durch Sprühtrocknung oder Eindampfen im Vakuum isoliert. Die erhaltene, erfindungsgemäße Farbstoffmischung färbt Baumwolle in schwarzen Tönen.

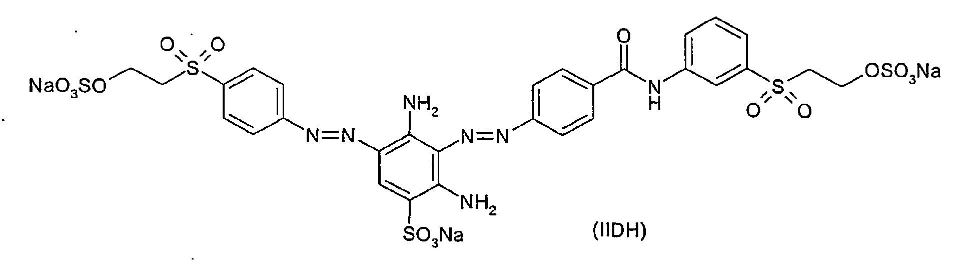

### Beispiel 4

70 Teile eines elektrolythaltigen Farbstoffpulvers, das den marineblauen Disazofarbstoff der Formel (IA) in 70%-igem Anteil enthält und 30 Teile eines elektrolythaltigen Farbstoffpulvers, das den braunen Disazofarbstoff der Formel (IIIA)

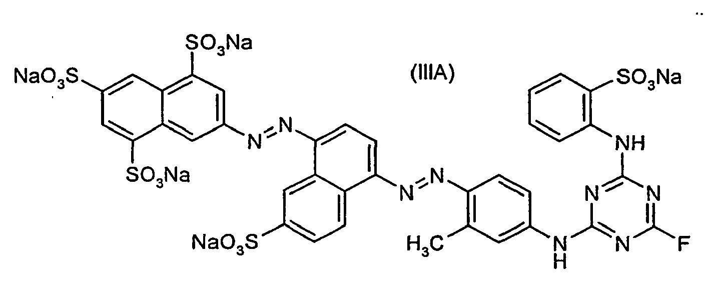

in 75%-igem Anteil enthält, werden in 700 Teilen Wasser gelöst und die erhaltene Farbstofflösung auf pH 5.5-6.5 eingestellt. Durch Eindampfen dieser Farbstofflösung erhält man eine Farbstoffmischung, die auf Baumwolle unter den für Reaktivfarbstoffe üblichen Färbebedingungen marineblaue bis tiefschwarze Färbungen und Drucke liefert.

### Beispiele 5 bis 545

Die nachfolgenden Tabellenbeispiele beschreiben weitere erfindungsgemäße Mischungen der Farbstoffe der allgemeinen Formeln (I) - (III), die jeweils in Form des Natriumsalzes angeführt sind. Die Mischungsverhältnisse sind in Gewichtsprozent angegeben. Die Farbstoffmischungen liefern nach den für Reaktivfarbstoffen üblichen Färbemethoden, beispielsweise auf Baumwolle, tiefschwarze Färbungen.

### Farbstoff-Mischungen gemäß Beispiel 1

| Beispiel | Farbstoff nach allg. Formel (I) | Farbstoff nach allg. Formel (II) | Verhältnis (I):(II) |
|---|---|---|---|
| 5 | (IA) | 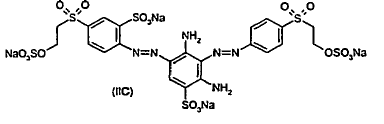 | 85 : 15 |
| 6 | (IA) | 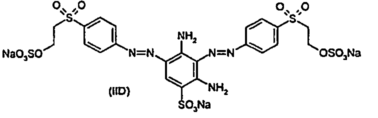 | 88 : 12 |
| 7 | (IA) | 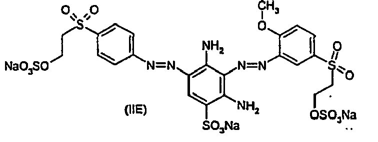 | 80 : 20 |
| 8 | (IA) | 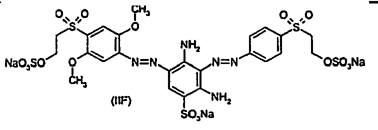 | 87:13 |
| 9 | (IA) | 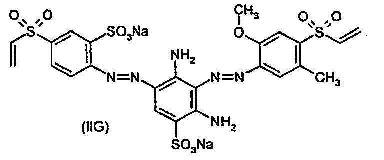 | 88:12 |
| 10 | (IA) | 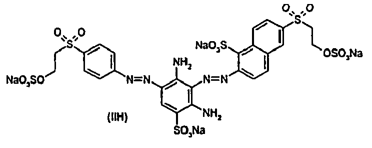 | 86:14 |
| 11 | (IA) | 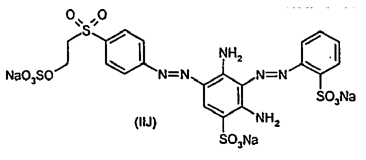 | 75 : 25 |
| 12 | (IA) | 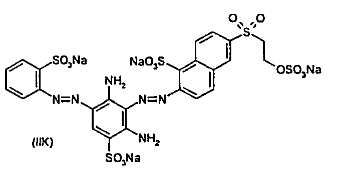 | 80 : 20 |
| 13 | (IA) | 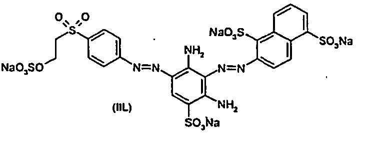 | 78 : 22 |
| 14 | (IA) | 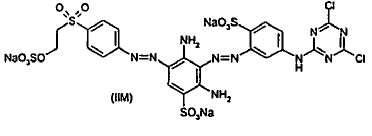 | 87 : 13 |
| 15 | (IA) | 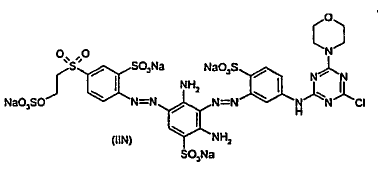 | 86 : 14 |
| 16 | (IA) | 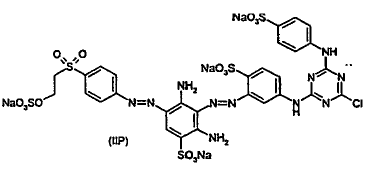 | 83:17 |
| 17 | (IA) | 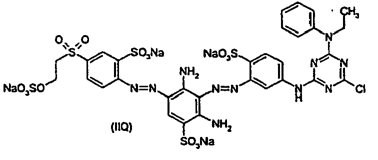 | 82: 18 |
| 18 | (IA) | 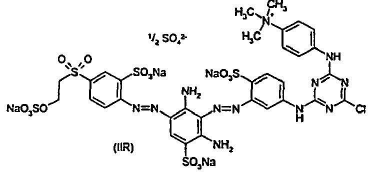 | 88 : 12 |
| 19 | (IA) | 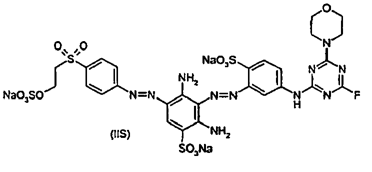 | 86 : 14 |
| 20 | (IA) | 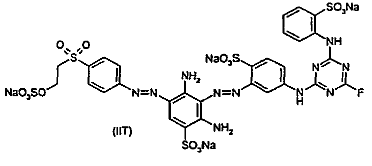 | 82:18 |
| 21 | (IA) | 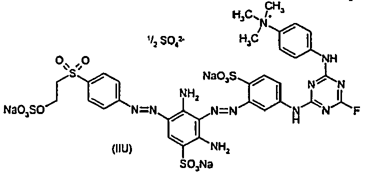 | 88 : 12 |
| 22 | (IA) | 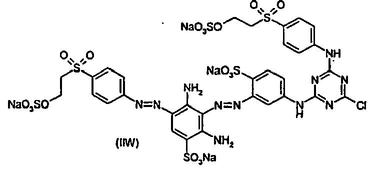 | 86: 14 |
| 23 | (IA) | 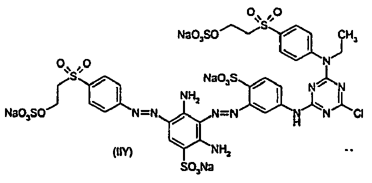 | 87 : 13 |
| 24 | (IA) | 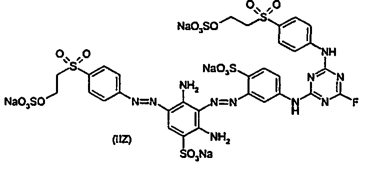 | 87:13 |
| 25 | (IA) | 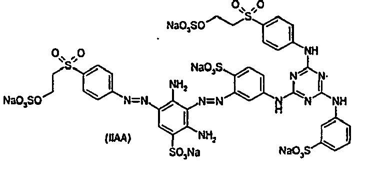 | 85 : 15 |
| 26 | (IA) | 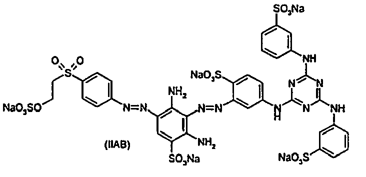 | 78 : 22 |
| 27 | (IA) | 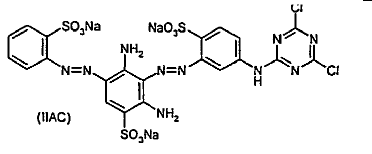 | 77 : 23 |
| 28 | (IA) | 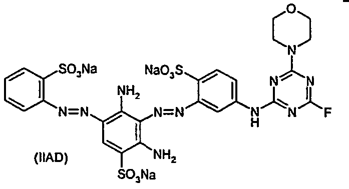 | 75 : 25 |
| 29 | (IA) | 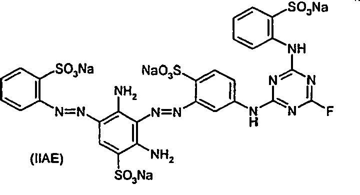 | 74 : 26 |
| 30 | (IA) | 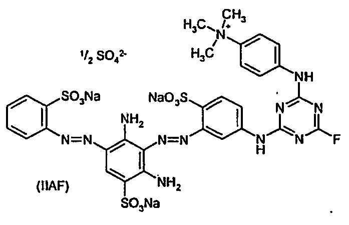 | 77 : 23 |
| 31 | (IA) | 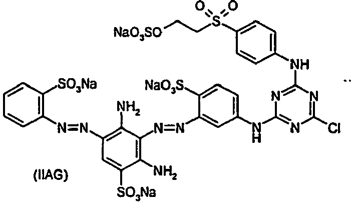 | 80 : 20 |
| 32 | (IA) | 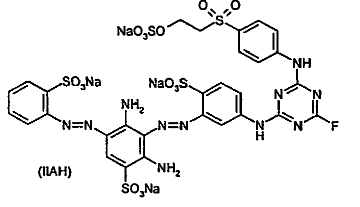 | 82: 18 |
| 33 | (IA) | 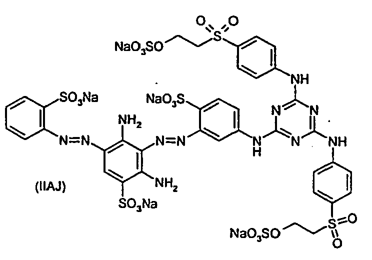 | 87:13 |
| 34 | (IA) | 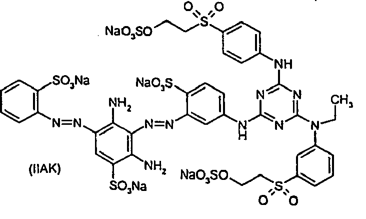 | 86: 14 |
| 35 | (IA) | 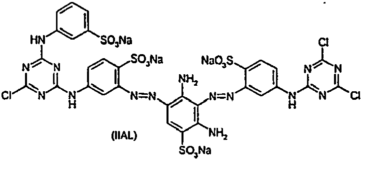 | 83: 17 |
| 36 | (IA) | 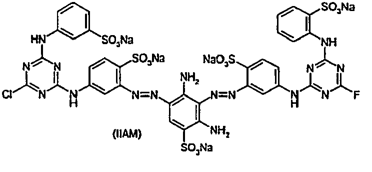 | 82: 18 |
| 37 | (IA) | 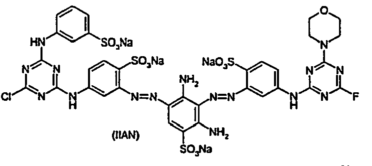 | 84:16 |
| 38 | (IA) | 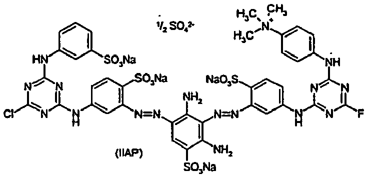 | 85:15 |
| 39 | (IA) | 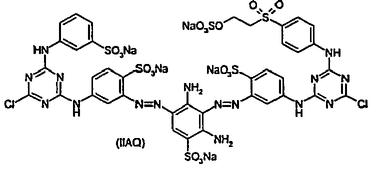 | 83: 17 |
| 40 | (IA) | 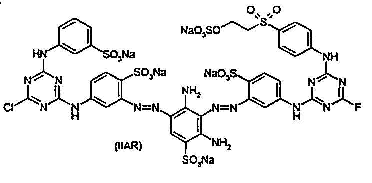 | 87:13 |
| 41 | (IA) | 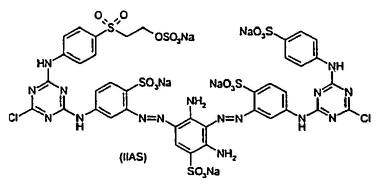 | 82: 18 |
| 42 | (IA) | 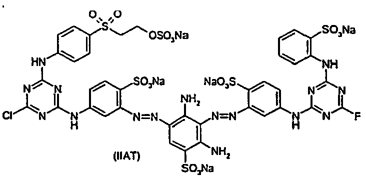 | 86: 14 |
| 43 | (IA) | 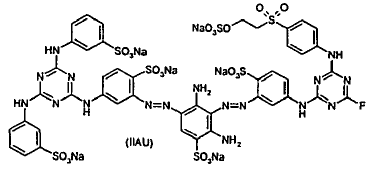 | 82 : 18 |
| 44 | (IA) | 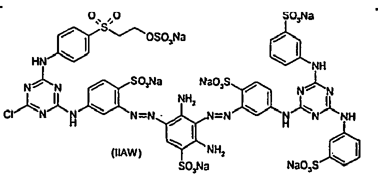 | 85:15 |
| 45 | (IA) | 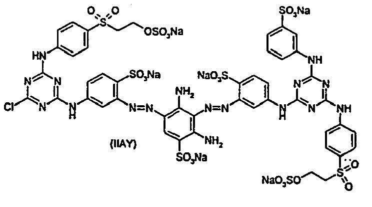 | 87:13 |
| 46 | (IA) | 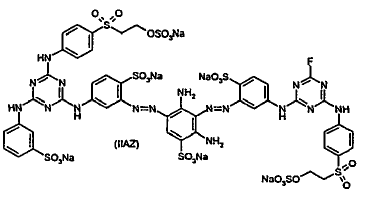 | 88 : 12 |
| 47 | (IA) | 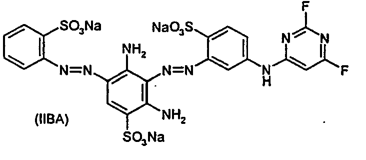 | 80 : 20 |
| 48 | (IA) | 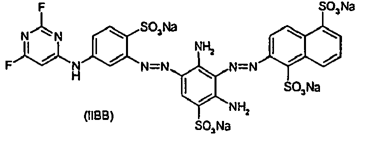 | 80 : 20 |
| 49 | (IA) | 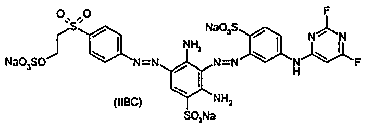 | 85 : 15 |
| 50 | (IA) | 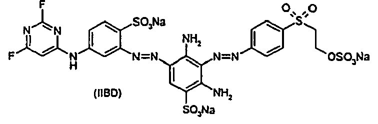 | 85 : 15 |
| 51 | (IA) | 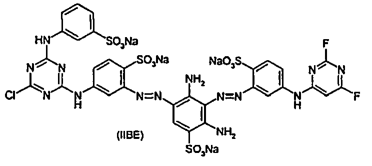 | 82:18 |
| 52 | (IA) | 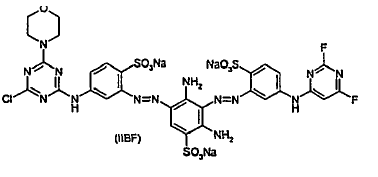 | 83:17 |
| 53 | (IA) | 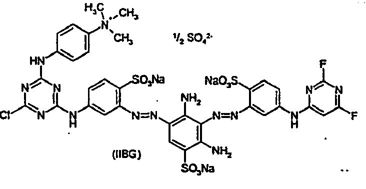 | 84:16 |
| 54 | (IA) | 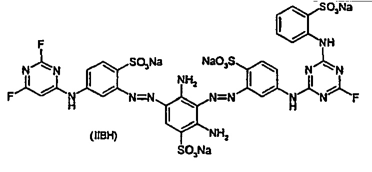 | 85:15 |
| 55 | (IA) | 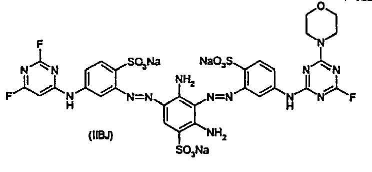 | 85 : 15 |
| 56 | (IA) | 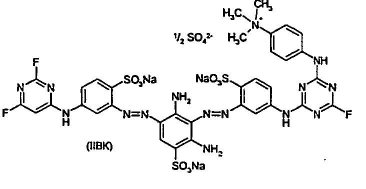 | 87 : 13 |
| 57 | (IA) | 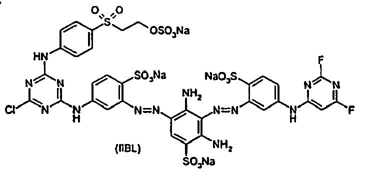 | 88 : 12 |
| 58 | (IA) | 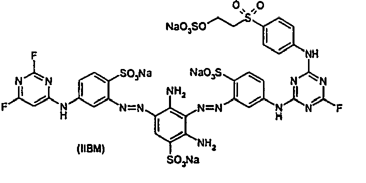 | 87: 13 |
| 59 | (IA) | 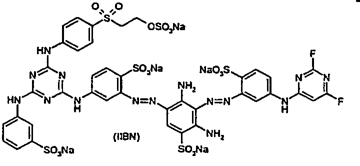 | 85 : 15 |
| 60 | (IA) | 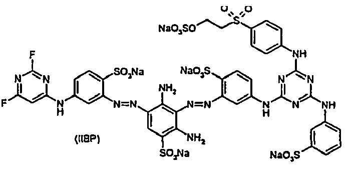 | 85:15 |
| 61 | (IA) | 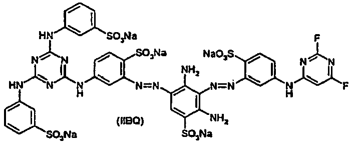 | 80 : 20 |
| 62 | (IA) | 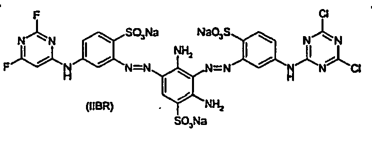 | 88:12 |
| 63 | (IA) | 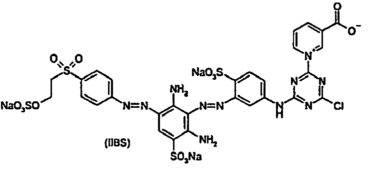 | 85 : 15 |
| 64 | (IA) | 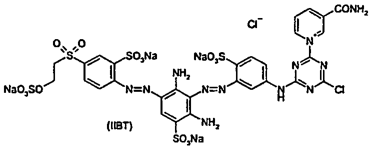 | 80 : 20 |
| 65 | (IA) | 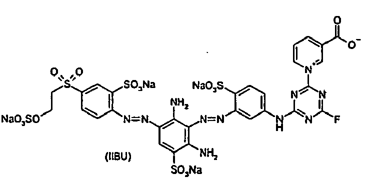 | 80 : 20 |
| 66 | (IA) | 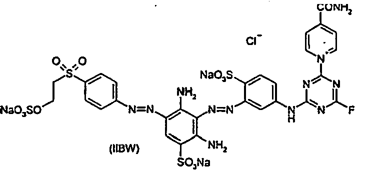 | 83:17 |
| 67 | (IA) | 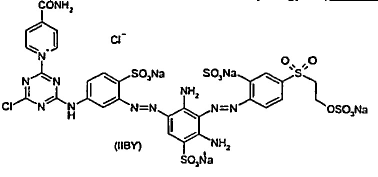 | 80:20 |
| 68 | (IA) | 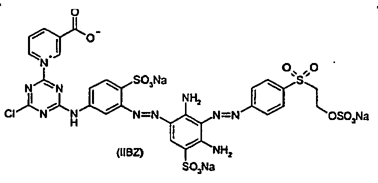 | 82:18 |
| 69 | (IA) | 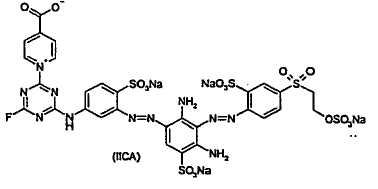 | 83:17 |
| 70 | (IA) | 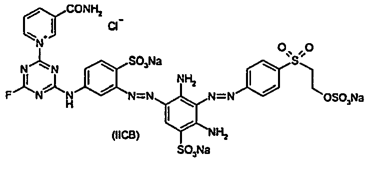 | 85:15 |
| 71 | (IA) | 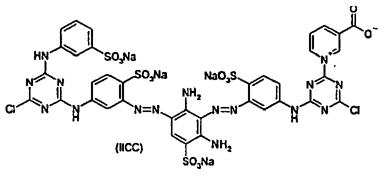 | 80 : 20 |
| 72 | (IA) | 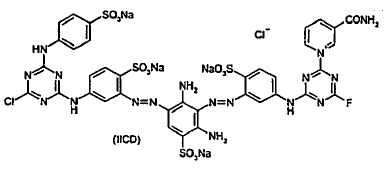 | 82:18 |
| 73 | (IA) | 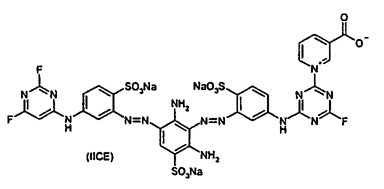 | 85 : 15 |
| 74 | (IA) | 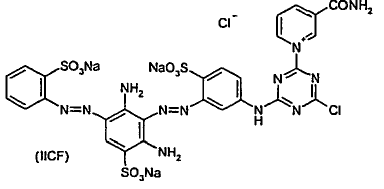 | 70 : 30 |
| 75 | (IA) | 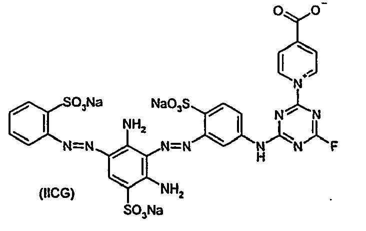 | 75:25 |

### Beispiele 76 - 147

Wiederholung der Beispiele 1 und 5 - 75 unter Verwendung von Farbstoff (IB) anstelle von Farbstoff (IA).

### Beispiele 148 - 219

Wiederholung der Beispiele 1 und 5 - 75 unter Verwendung von Farbstoff (IC) anstelle von Farbstoff (IA):

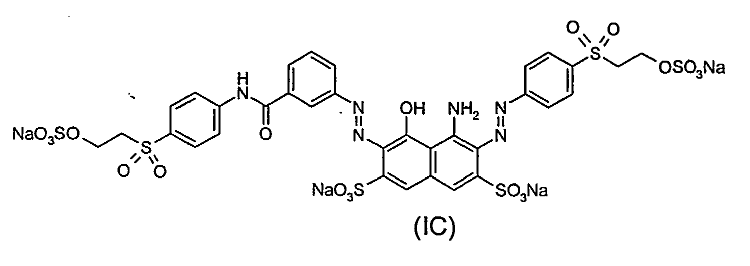

### Beispiele 220 - 291

Wiederholung der Beispiele 1 und 5 - 75 unter Verwendung von Farbstoff (ID) anstelle von Farbstoff (IA):

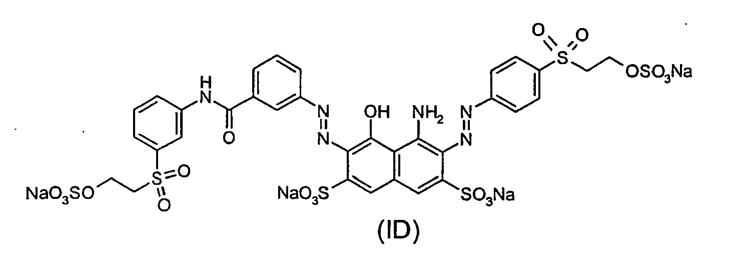

### Beispiele 292 - 363

Wiederholung der Beispiele 1 und 5 - 75 unter Verwendung von Farbstoff (IE) anstelle von Farbstoff (IA):

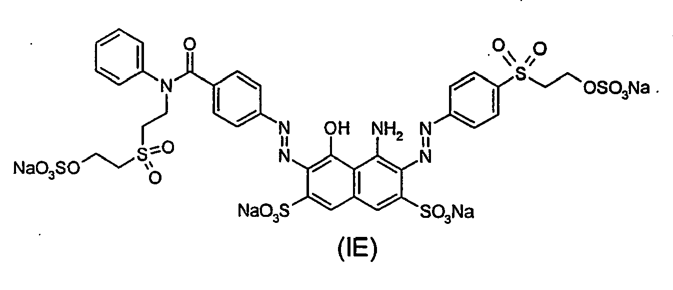

### Farbstoff-Mischungen gemäß Beispiel 1 oder 2

| Beispiel | Farbstoff nach allg. Formel (I) | Farbstoff nach allg. Formel (II) | Verhältnis (I):(II) |
|---|---|---|---|
| 364 | (IA) | 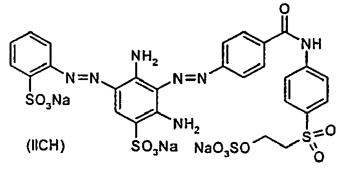 | 80 : 20 |
| 365 | (IB) | 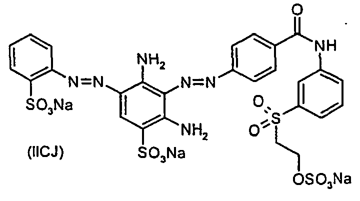 | 75 : 25 |
| 366 | (IC) | 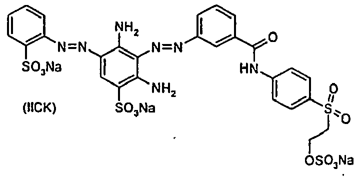 | 78 : 22 |
| 367 | (ID) | 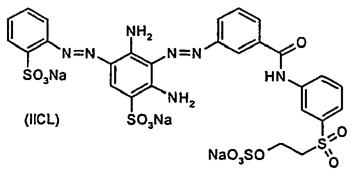 | 75:25 |
| 368 | (IA) | 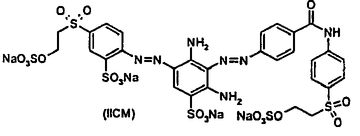 | 84 : 16 |
| 369 | (IC) | 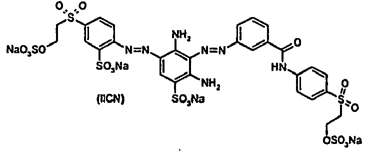 | 83 : 17 |
| 370 | (ID) | 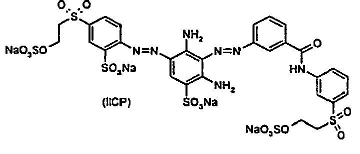 | 85:15 |
| 371 | (IA) | 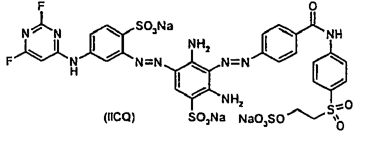 | 85 : 15 |
| 372 | (IB) | 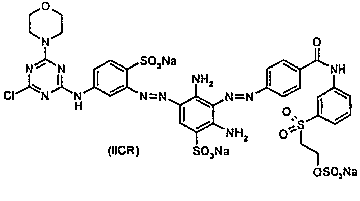 | 82: 18 |
| 373 | (IC) | 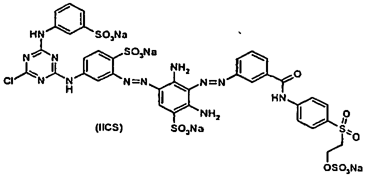 | 83 : 17 |
| 374 | (ID) | 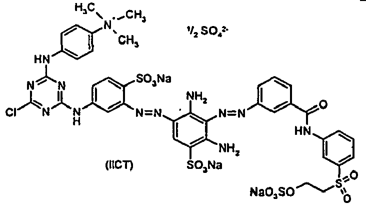 | 82: 18 |
| 375 | (IA) | 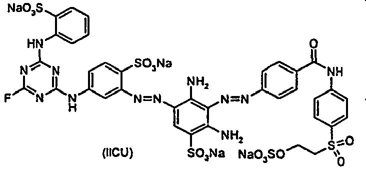 | 85:15 |
| 376 | (IA) | 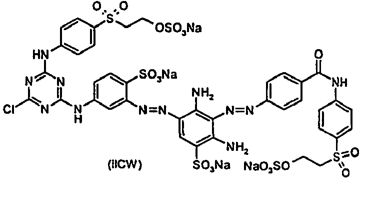 | 85:15 |
| 377 | (IB) | 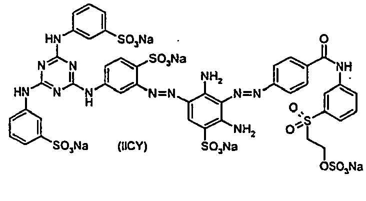 | 80: 20 |
| 378 | 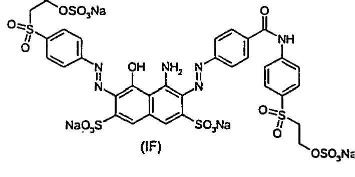 | (IID) | 85 : 15 |
| 379 | (IF) | (IIF) | 85:15 |
| 380 | (IF) | (IIBD) | 87 : 13 |
| 381 | (IF) | 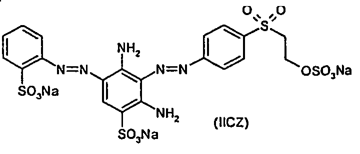 | 75 : 25 |
| 382 | (IF) | 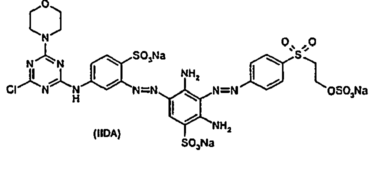 | 80: 20 |
| 383 | (IF) | 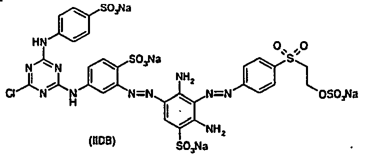 | 80:20 |
| 384 | (IF) | 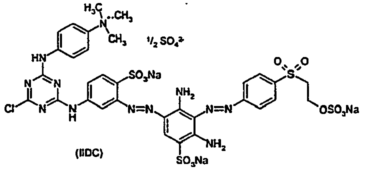 | 85 : 15 |
| 385 | (IF) | 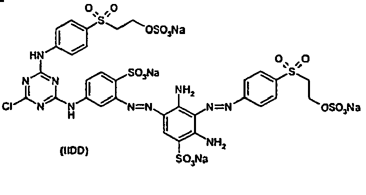 | 87 : 13 |
| 386 | (IF) | 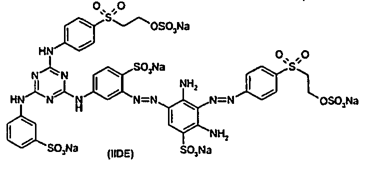 | 83 : 17 |
| 387 | (IF) | 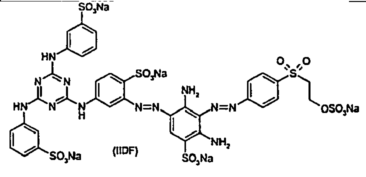 | 77 : 23 |

### Beispiele 388 - 397

Wiederholung der Beispiele 378 - 387 unter Verwendung von Farbstoff (IG) anstelle von Farbstoff (IF):

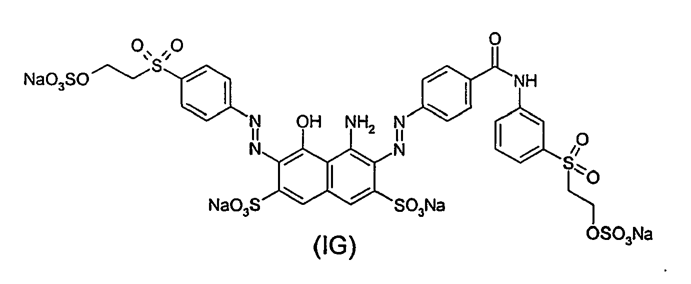

### Beispiele 398 - 407

Wiederholung der Beispiele 378 - 387 unter Verwendung von Farbstoff (IH) anstelle von Farbstoff (IF):

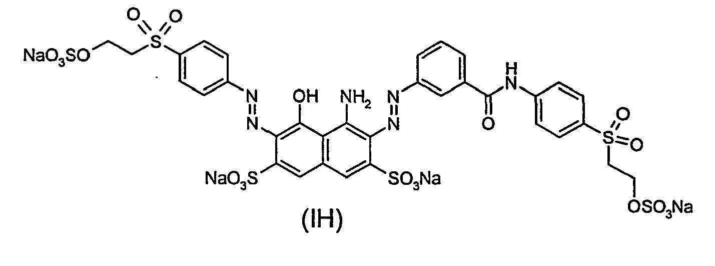

### Beispiele 408 - 417

Wiederholung der Beispiele 378 - 387 unter Verwendung von Farbstoff (IJ) anstelle von Farbstoff (IF):

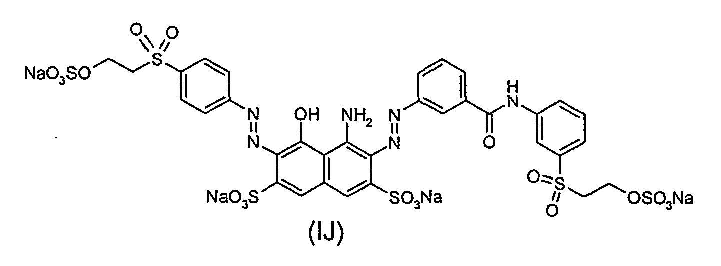

### Farbstoff-Mischungen gemäß Beispiel 1 oder 3

| Beispiel | Farbstoff nach allg. Formel (I) | Farbstoff nach allg. Formel (II) | Verhältnis (I):(II) |
|---|---|---|---|
| 418 | (IA) | 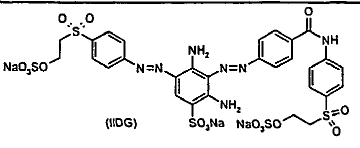 | 87 : 13 |
| 419 | (IB) | (IIDH) | 80:20 |
| 420 | (IC) | 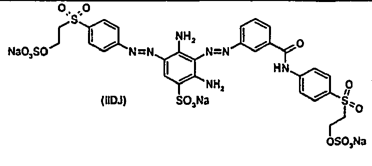 | 86:14 |
| 421 | (ID) | 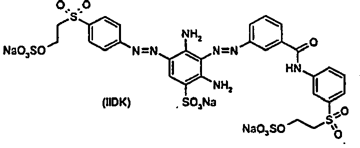 | 83 : 17 |
| 422 | (IE) | 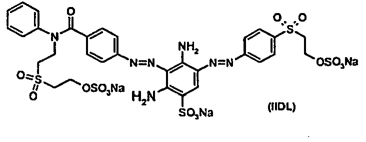 | 80 : 20 |
| 423 | (IF) | 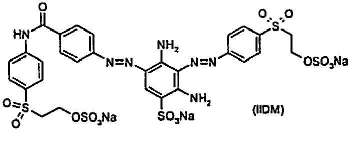 | 86:14 |
| 424 | (IG) | 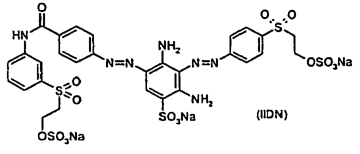 | 84 : 16 |
| 425 | (IH) | 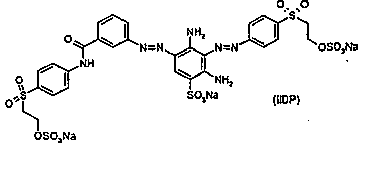 | 85:15 |
| 426 | (IJ) | 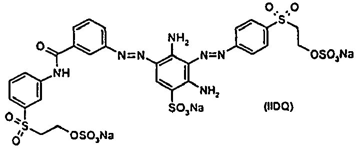 | 82: 18 |

### Farbstoff-Mischungen gemäß Beispiel 4

| Beispiel | Farbstoff nach allg. Formel (I) | Farbstoff nach allg. Formel (III) | Verhältnis (I):(III) |
|---|---|---|---|
| 427 | (IA) | 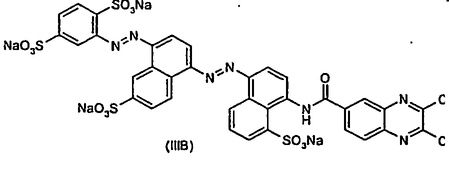 | 75:25 |
| 428 | (IA) | 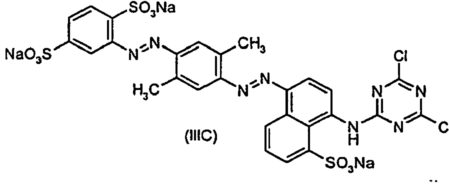 | 80 : 20 |
| 429 | (IA) | 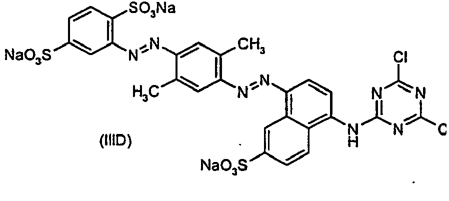 | 83:17 |
| 430 | (IA) | 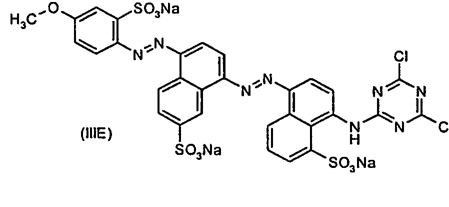 | 82: 18 |
| 431 | (IA) | 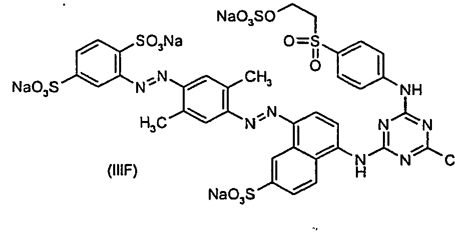 | 80 : 20 |
| 432 | (IA) | 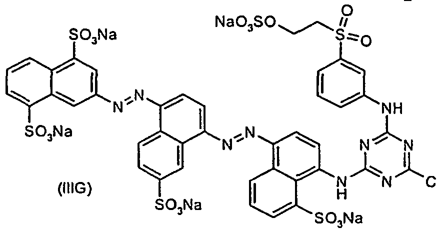 | 80 : 20 |
| 433 | (IA) | 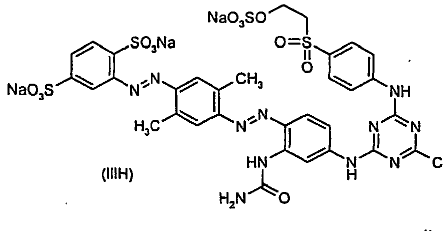 | 76 : 24 |
| 434 | (IA) | 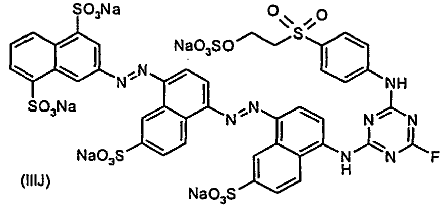 | 80: 20 |
| 435 | (IA) | 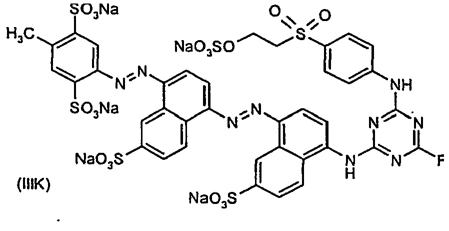 | 82:18 |
| 436 | (IA) | 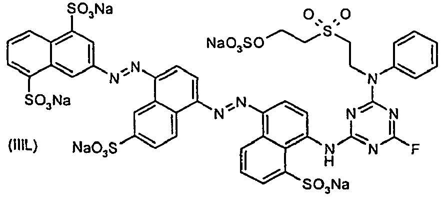 | 75 : 25 |
| 437 | (IA) | 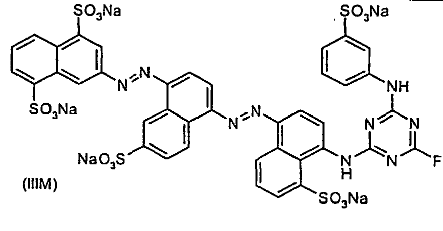 | 76:24 |
| 438 | (IA) | 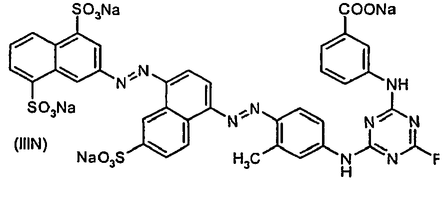 | 77:23 |
| 439 | (IA) | 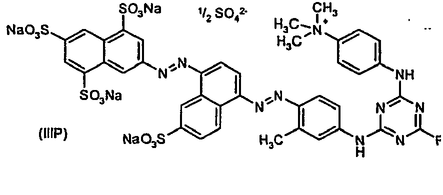 | 78 : 22 |
| 440 | (IA) | 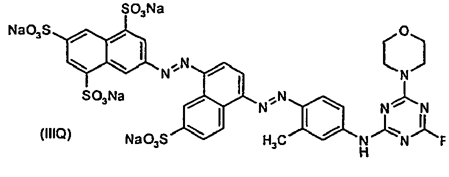 | 75 : 25 |
| 441 | (IA) | 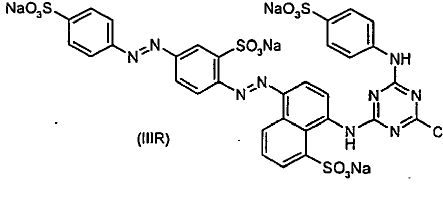 | 70: 30 |
| 442 | (IA) | 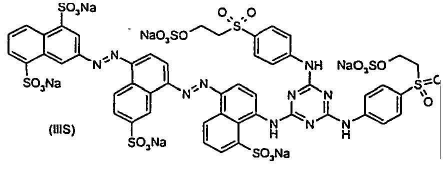 | 82: 18 |
| 443 | (IA) | 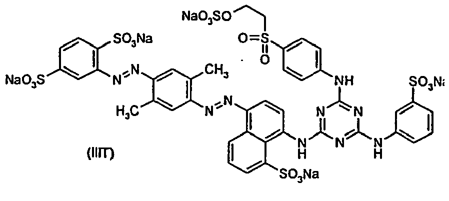 | 75 : 25 |
| 444 | (IA) | 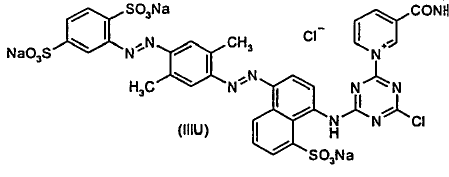 | 80 : 20 |
| 445 | (IA) | 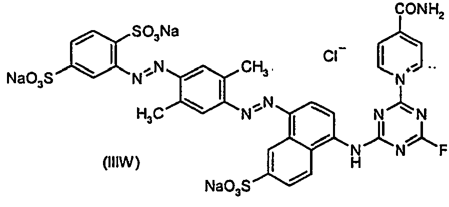 | 82:18 |
| 446 | (IA) | 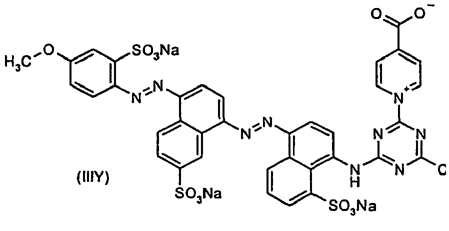 | 80 : 20 |
| 447 | (IA) | 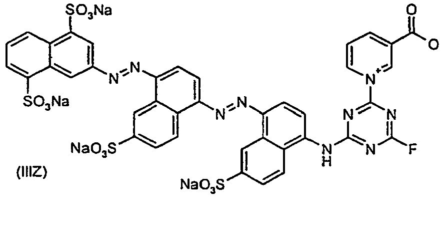 | 77 : 23 |
| 448 | (IA) | 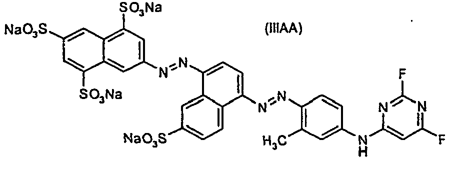 | 75:25 |
| 449 | (IA) | 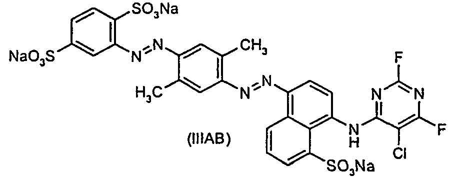 | 75 : 25 |

### Beispiele 450 - 473

Wiederholung der Beispiele 4 und 427 - 449 unter Verwendung von Farbstoff (IB) anstelle von Farbstoff (IA).

### Beispiele 474 - 497

Wiederholung der Beispiele 4 und 427 - 449 unter Verwendung von Farbstoff (IC) anstelle von Farbstoff (IA).

### Beispiele 498 - 521

Wiederholung der Beispiele 4 und 427 - 449 unter Verwendung von Farbstoff (ID) anstelle von Farbstoff (IA).

### Beispiele 522 - 545

Wiederholung der Beispiele 4 und 427 - 449 unter Verwendung von Farbstoff (IE) anstelle von Farbstoff (IA).

### Anwendungsbeispiel 1

2 Teile eines gemäß Beispiel 1 - 4 erhaltenen Farbstoffs werden in 999 Teilen Wasser gelöst und 5 Teile Natriumcarbonat, 0,7 Teile Natriumhydroxyd (in Form einer 32,5%-igen wässrigen Lösung) und gegebenenfalls 1 Teil eines Benetzungsmittels zugesetzt. In dieses Färbebad gibt man 100 g eines Baumwollgewebes. Die Temperatur des Färbebades wird zunächst 10 Minuten bei 25°C gehalten, dann in 30 Minuten auf Endtemperatur (40-60°C) erhöht und diese Temperatur weitere 60-90 Minuten gehalten. Danach wird die gefärbte Ware zunächst 2 Minuten mit Trinkwasser und anschließend 5 Minuten mit E-Wasser gespült. Man neutralisiert die gefärbte Ware bei 40°C in 1000 Teilen einer wäßrigen Lösung, die 1 Teil einer 50%igen Essigsäure enthält, während 10 Minuten. Mit E-Wasser wird bei 70°C nachgespült und dann 15 Minuten mit einem Waschmittel kochend geseift, nochmals gespült und getrocknet. Man erhält eine farbstarke marineblaue bis graue Färbung mit sehr guten Echtheitseigenschaften.

### Anwendungsbeispiel 2

4 Teile eines gemäß Beispiel 1 - 4 erhaltenen Farbstoffs und 5 Teile Natriumchlorid werden in 999 Teilen Wasser gelöst, 7 Teile Natriumcarbonat, 0,7 Teile Natriumhydroxyd (in Form einer 32,5%-igen wässrigen Lösung) und gegebenenfalls 1 Teil eines Benetzungsmittels zugesetzt. In dieses Färbebad gibt man 100 g eines Baumwollgewebes. Die weitere Bearbeitung erfolgt wie in Anwendungsbeispiel 1 angegeben. Man erhält eine farbstarke marineblaue bis schwarze Färbung mit sehr guten Echtheitseigenschaften.

### Anwendungsbeispiel 3

8 Teile eines gemäß Beispiel 1 - 4 erhaltenen Farbstoffs und 10 Teile Natriumchlorid werden in 997 Teilen Wasser gelöst, 10 Teile Natriumcarbonat, 1,3 Teile Natriumhydroxyd (in Form einer 32,5%-igen wässrigen Lösung) und gegebenenfalls 1 Teil eines Benetzungsmittels zugesetzt. In dieses Färbebad gibt man 100 g eines Baumwollgewebes. Die weitere Bearbeitung erfolgt wie in Anwendungsbeispiel 1 angegeben. Man erhält eine tiefschwarze Färbung mit sehr guten Echtheitseigenschaften.

## Patentansprüche

1. Reaktivfarbstoffmischungen, die einen oder mehrere Farbstoffe der nachstehend angegebenen und definierten allgemeinen Formel (I), 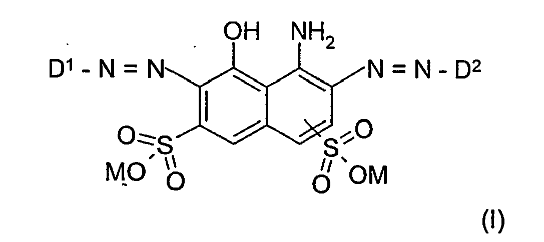 und einen oder mehrere Farbstoffe der nachstehend angegebenen und definierten allgemeinen Formel (II) 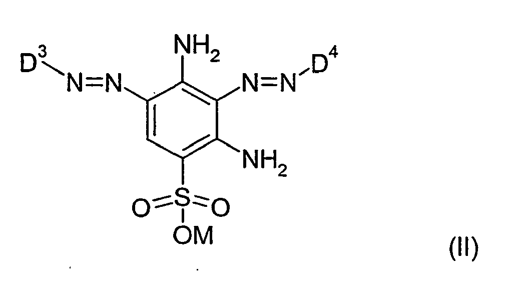 oder einen oder mehrere Farbstoffe der nachstehend angegebenen und definierten allgemeinen Formel (III) enthalten 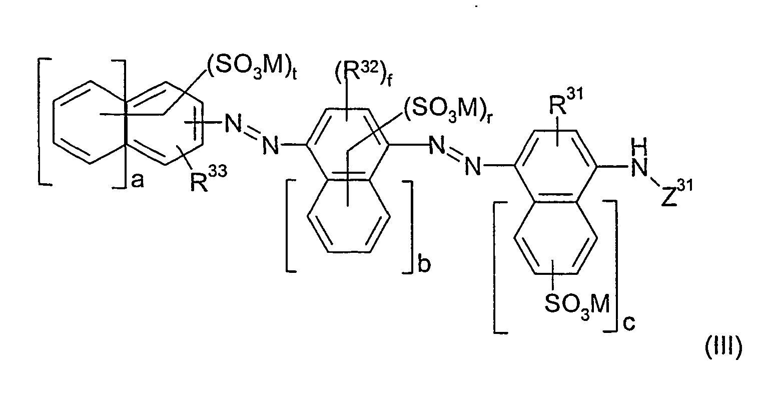 in welchen bedeuten:
D¹ und D² sind eine Gruppe der allgemeinen Formel (1) 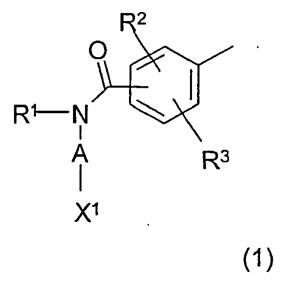 worin
R¹ Wasserstoff, (C₁-C₄)-Alkyl, Aryl oder ein substituierter Arylrest ist;
R² und R³ unabhängig voneinander Wasserstoff, (C₁-C₄)-Alkyl, (C₁-C₄)-Alkoxy, Hydroxy, Sulfo, Carboxy, Amido oder Halogen sind; und
A eine Phenylengruppe der allgemeinen Formel (2) ist 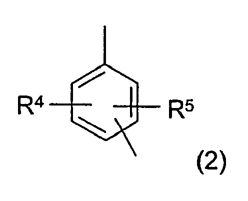 worin
R⁴ und R⁵ unabhängig voneinander Wasserstoff, (C₁-C₄)-Alkyl, (C₁-C₄)-Alkoxy, Hydroxy, Sulfo, Carboxy, Amido oder Halogen bedeuten; oder
eine Naphthylengruppe der allgemeinen Formel (3) 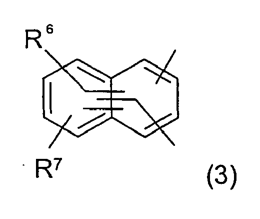 worin
R⁶ und R⁷ unabhängig voneinander Wasserstoff, (C₁-C₄)-Alkyl, (C₁-C₄)-Alkoxy, Hydroxy, Sulfo, Carboxy, Amido oder Halogen bedeuten; oder
eine Polymethylengruppe der allgemeinen Formel (4)
-(CR⁸R⁹)ₖ- (4)
worin
k eine ganze Zahl größer 1 ist und
R⁸ und R⁹ unabhängig voneinander Wasserstoff, (C₁-C₄)-Alkyl, (C₁-C₄)-Alkoxy, Hydroxy, Cyano, Amido, Halogen oder Aryl sind; und
X¹ für Wasserstoff oder eine Gruppe der Formel -SO₂-Z steht; oder
für eine Phenylgruppe der allgemeinen Formel (5) stehen 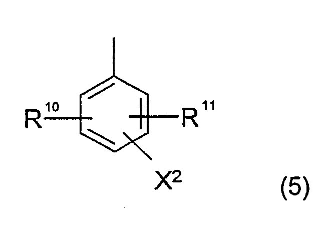 worin
R¹⁰ und R¹¹ unabhängig voneinander Wasserstoff, (C₁-C₄)-Alkyl, (C₁-C₄)-Alkoxy, Hydroxy, Sulfo, Carboxy, Amido oder Halogen sind; und
X² eine der Bedeutungen von X¹ hat;
oder eine Naphthylgruppe der allgemeinen Formel (6) bedeuten 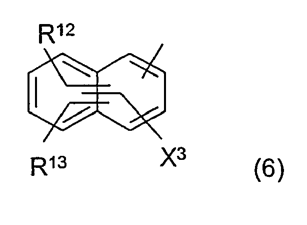 worin
R¹² und R¹³ unabhängig voneinander Wasserstoff, (C₁-C₄)-Alkyl, (C₁-C₄)-Alkoxy, Hydroxy, Sulfo, Carboxy, Amido oder Halogen sind; und
X³ eine der Bedeutungen von X¹ hat;
Z -CH=CH₂, -CH₂CH₂Z¹ oder Hydroxy bedeutet,
worin
Z¹ Hydroxy oder eine unter Alkaliwirkung abspaltbare Gruppe ist; und
M Wasserstoff, ein Alkalimetall oder ein Äquivalent eines Erdalkalimetalls bedeutet;
D³ und D⁴ haben unabhängig voneinander eine der Bedeutungen von D¹ oder D² oder sind eine Gruppe der allgemeinen Formel (7) oder (8) 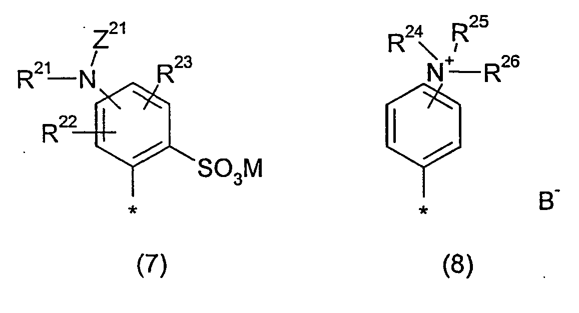 worin
R²² und R²³ unabhängig voneinander eine der Bedeutungen von R² und R³ haben;
R²¹ ist Wasserstoff, (C₁- C₄)-Alkyl, unsubstituiertes oder durch (C₁-C₄)-Alkyl, (C₁-C₄)-Alkoxy, Sulfo, Halogen oder Carboxy substituiertes Phenyl; und
Z²¹ ist ein heterocyclischer reaktiver Rest und
Z die obengenannte Bedeutung hat;
R²⁴, R²⁵ und R²⁶ sind (C₁-C₄)-Alkyl oder (C₁-C₄)-Hydroxyalkyl;
B⁻ ist das Äquivalent eines Anions, wie Hydrogensulfat, Sulfat,Fluorid, Chlorid, Bromid, Dihydrogenphosphat, Hydrogenphosphat, Phosphat, Hydroxid oder Acetat;
R³¹, R³² ,R³³ sind unabhängig voneinander Wasserstoff, (C₁-C₄)-Alkyl, (C₁-C₄)-Alkoxy, Carboxy, Halogen, (C₁-C₄)-Alkylcarbonylamino, Benzoylamino, Ureido;
Z³¹ besitzt eine der Bedeutungen von Z²¹;
a, b, c sind unabhängig voneinander 0 oder 1;
f, r sind unabhängig voneinander 0, 1 oder 2; und
t ist 0, 1, 2 oder 3;
wobei mindestens einer der Reste D¹ und D² für eine Gruppe der allgemeinen Formel (1) steht;
wobei im Falle, daß A für eine Gruppe der allgemeinen Formel (4) steht, R¹ für Aryl oder substituiertes Aryl steht; und
wobei der Reaktivfarbstoff der allgemeinen Formel (I) mindestens eine -SO₂-Z - Gruppe enthält.

2. Reaktivfarbstoffmischungen gemäß Anspruch 1, **dadurch gekennzeichnet, dass** der heterocyclische reaktive Rest Z²¹ eine Gruppe der allgemeinen Formel (9) oder (10) oder (11) ist, 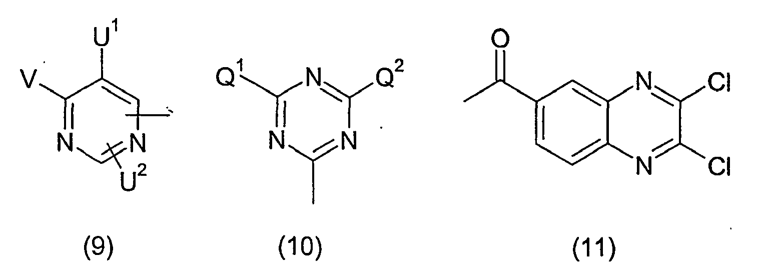 worin
V Fluor oder Chlor bedeutet;
U¹, U² unabhängig voneinander Fluor, Chlor oder Wasserstoff sind; und
Q¹, Q² unabhängig voneinander Chlor, Fluor, Cyanamido, Hydroxy, (C₁-C₆)-Alkoxy, Phenoxy, Sulfophenoxy, Mercapto, (C₁-C₆)-Alkylmercapto, Pyridino, Carboxypyridino, Carbamoylpyrimidino oder eine Gruppe der allgemeinen Formel (12) oder (13) bedeuten 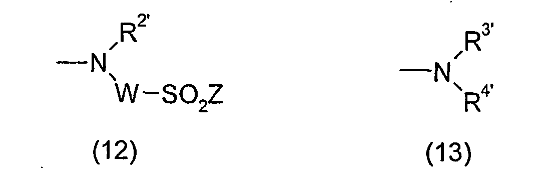 worin
R²' Wasserstoff oder (C₁-C₆)-Alkyl, Sulfo-(C₁-C₆)-Alkyl, oder Phenyl ist, das unsubstituiert oder durch (C₁-C₄)-Alkyl, (C₁-C₄)-Alkoxy, Sulfo, Halogen, Carboxy, Acetamido, Ureido substituiert ist;
R³' und R⁴' haben unabhängig voneinander eine der Bedeutungen von R²', oder sind eine Gruppe der allgemeinen Formel (8), oder bilden ein cyclisches Ringsystem der Formel -(CH₂)ⱼ- wobei j 4 oder 5 bedeutet, oder alternativ -(CH₂)₂-E-(CH₂)₂-, wobei E Sauerstoff, Schwefel, Sulfo, -NR⁵'- mit R⁵' = (C₁-C₆)-Alkyl ist;
W ist Phenylen, das unsubstituiert oder substituiert ist durch 1 oder 2 Substituenten, wie (C₁-C₄)-Alkyl, (C₁-C₄)-Alkoxy, Carboxy, Sulfo, Chlor, Brom, oder ist (C₁-C₄)-Alkylen-Arylen oder (C₂-C₆)-Alkylen, das unterbrochen sein kann durch Sauerstoff, Schwefel, Sulfo, Amino, Carbonyl, Carbonamido, oder ist Phenylen-CONH-Phenylen, das unsubstituiert oder durch (C₁-C₄)-Alkyl, (C₁-C₄)-Alkoxy, Hydroxy, Sulfo, Carboxy, Amido, Ureido oder Halogen substituiert ist, oder ist Naphthylen, das unsubstituiert oder durch eine oder zwei Sulfogruppen substituiert ist; und
die Substituenten R¹ bis R⁵ , R⁸ bis R¹¹, R²¹ und R³¹ Wasserstoff, R⁶, R⁷, R¹², R¹³, R²² und R²³ Wasserstoff oder Sulfo R²⁴, R²⁵ und R²⁶ Methyl, R³² Wasserstoff oder Methyl und R³³ Wasserstoff, Methyl oder Methoxy bedeuten.

3. Reaktivfarbstoffmischungen gemäß mindestens einem der Ansprüche 1 oder 2, **dadurch gekennzeichnet, daß** Z Vinyl, β-Chlorethyl oder β-Sulfatoethyl bedeutet.

4. Reaktivfarbstoffmischungen gemäß mindestens einem der Ansprüche 1 bis 3, **dadurch gekennzeichnet, dass** D³ oder D⁴ in der allgemeinen Formel (II) - 3-(β-Sulfatoethylsulfonyl)-phenyl, 4-(β-Sulfatoethylsulfonyl)-phenyl, 2-Sulfo-4-(β-sulfatoethylsulfonyl)-phenyl, 2-Methoxy-5-(β-sulfatoethylsulfonyl)-phenyl, 2,5-Dimethoxy-4-(β-sulfatoethylsulfonyl)-phenyl, 2-Methoxy-5-methyl-4-(β-sulfatoethylsulfonyl)-phenyl, 3- oder 4-Vinylsulfonyl-phenyl, 4-(3-(2-Sulfatoethylsulfonyl)-phenylcarbamoyl)-phenyl, 4-(4-(2-Sulfatoethylsulfonyl)-phenylcarbamoyl)-phenyl, 3-(3-(2-Sulfatoethylsulfonyl)-phenylcarbamoyl)-phenyl, 3-(4-(2-Sulfatoethylsulfonyl)-phenylcarbamoyl)-phenyl, 1-Sulfo-4-(2,4-difluoro-pyrimidin-6-yl)-amino-2-phenyl, oder 1-Sulfo-4-(4,6-difluoro-pyrimidin-2-yl)-amino-2-phenyl bedeuten.

5. Reaktivfarbstoffmischungen gemäß mindestens einem der Ansprüche 1 bis 4, **dadurch gekennzeichnet, dass** Z³¹ in der allgemeinen Formel (III) 2,4-Dichlor-1,3,5-triazin-6-yl, 2-Chlor-4-(3-(2-sulfatoethylsulfonyl)-phenylamino)-1,3,5-triazin-6-yl, 2-Chlor-4-(4-(2-sulfatoethylsulfonyl)-phenylamino)-1,3,5-triazin-6-yl, 2-Chlor-4-(3-(vinylsulfonyl)-phenylamino)-1,3,5-triazin-6-yl, 2-Chlor-4-(4-(vinylsulfonyl)-phenylamino)-1,3,5-triazin-6-yl, 2-Chlor-4-(N-methyl-N-(2-(2-sulfatoethylsulfonyl)-ethyl)-amino)-1,3,5-triazin-6-yl, 2-Fluor-4-morpholino-1,3,5-triazin-6-yl, 2-Fluor-4-(2-sulfophenylamino)-1,3,5-triazin-6-yl, 2-Fluor-4-(3-sulfophenylamino)-1,3,5-triazin-6-yl, 2-Fluor-4-(4-sulfophenylamino)-1,3,5-triazin-6-yl, 2-Fluor-4-(3-trimethylammonium-phenylamino)-1,3,5-triazin-6-yl, 2-Fluor-4-(4-trimethylammoniumphenylamino)-1,3,5-triazin-6-yl, 2-Fluor-4-(3-(2-sulfatoethylsulfonyl)-phenylamino)-1,3,5-triazin-6-yl, 2-Fluor-4-(4-(2-sulfatoethylsulfonyl)-phenylamino)-1,3,5-triazin-6-yl, 2-Fluor-4-(3-(vinylsulfonyl)-phenylamino)-1,3,5-triazin-6-yl, 2-Fluor-4-(4-(vinylsulfonyl)-phenylamino)-1,3,5-triazin-6-yl, 2-Fluor-4-(N-methyl-N-(2-(2-sulfatoethylsulfonyl)-ethyl)-amino)-1,3,5-triazin-6-yl, 2-Fluor-4-(N-phenyl-N-(2-(2-sulfatoethylsulfonyf)-ethyl)-amino)-1,3,5-triazin-6-yl, 2,4-Difluor-pyrimidin-6-yl, 4,6-Difluor-pyrimidin-2-yl, 5-Chlor-2,4-difluor-pyrimidin-6-yl, 5-Chlor-4,6-difluor-pyrimidin-2-yl oder 2,3-Dichlorchinoxalin-6-carbonyl bedeutet.

6. Reaktivfarbstoffmischungen gemäß mindestens einem der Ansprüche 1 bis 5, **dadurch gekennzeichnet, daß** mindestens ein Farbstoff der allgemeinen Formel (la) 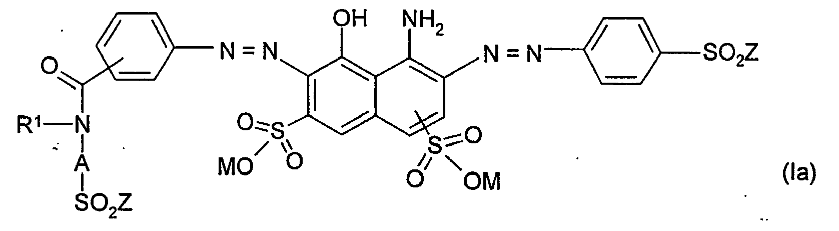 und mindestens ein Farbstoff der allgemeinen Formel (IIa) 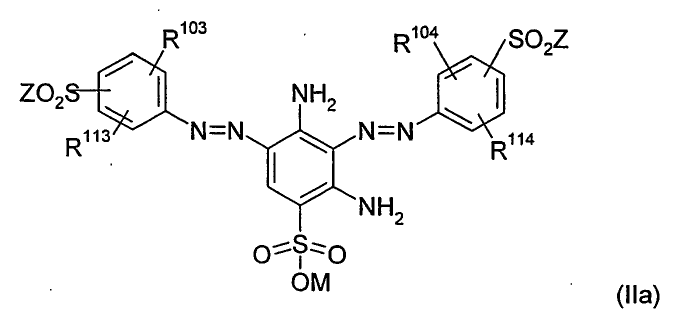 oder mindestens ein Farbstoff der allgemeinen Formel (IIIa) 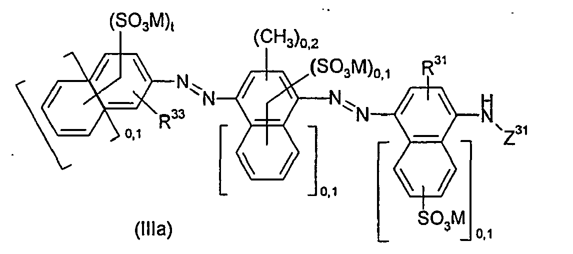 enthalten sind, worin M, A, R¹, Z, R³¹, R³³, Z³¹ und t wie in Anspruch 1 angegeben, definiert sind, und in der allgemeinen Formel (IIa) R¹⁰³, R¹¹³, R¹⁰⁴ und R¹¹⁴ unabhängig voneinander für Wasserstoff, Methyl, Methoxy oder Sulfo stehen.

7. Reaktivfarbstoffmischung gemäß Anspruch 6, **dadurch gekennzeichnet, daß** in Formel (la) A Phenylen, in den Formeln (la) und (IIa) Z Vinyl oder β-Sulfatoethyl bedeuten, und in Formel (IIIa) t für die Zahl 1 oder 2 steht und Z³¹ wie in Anspruch 1 angegeben, definiert ist.

8. Reaktivfarbstoffmischungen gemäß einem oder mehreren der Ansprüche 1 bis 7, enthaltend einen oder mehrere Farbstoffe der Formel (I) in einem Anteil von 30 bis 95 Gew.-% und einen oder mehrere Farbstoffe der Formel (II) oder (III) in einem Anteil von 5 bis 70 Gew.-% .

9. Reaktivfarbstoffmischungen gemäß Anspruch 1, enthaltend einen oder mehrere Monoazofarbstoffe der Formel (14) und/oder einen oder mehrere Monoazofarbstoffe der Formel (15) mit jeweils 0.5 bis 6 Gew.% 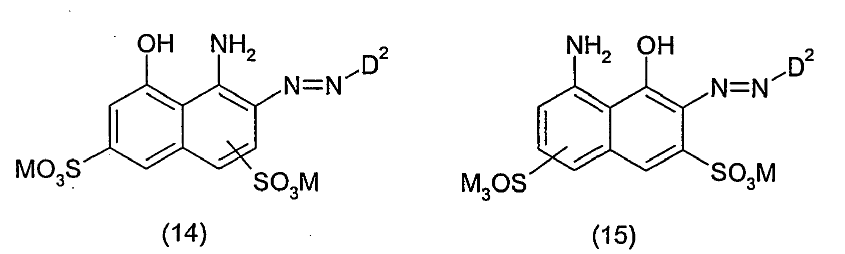 wobei D² und M die in Anspruch 1 angegebenen Bedeutungen besitzen.

10. Verfahren zur Herstellung von Farbstoffmischungen gemäß einem oder mehreren der Ansprüche 1 bis 8, **dadurch gekennzeichnet, daß** die Einzelfarbstoffe der Formeln (I) und (II) oder (III) und gegebenenfalls (14) und (15) im vorgegebenen Verhältnis entweder in fester Form mechanisch miteinander vermischt werden oder in Form der wässrigen Lösungen gemischt werden.

11. Verfahren zur Herstellung von Farbstoffmischungen gemäß einem oder mehreren der Ansprüche 1 bis 8, für den Fall dass D¹ und D⁴ gemäß den allgemeinen Formeln (I) und (II) gleiche Bedeutung besitzen , **dadurch gekennzeichnet, daß** man ein Amin der allgemeinen Formel (16)
D¹ - NH₂ (16),
worin D¹ wie in Anspruch 1 angegeben definiert ist, in üblicher Weise diazotiert und die erhaltene Diazoniumverbindung anschließend mit einer wässrigen Lösung oder Suspension einer Mischung mit festgelegtem Verhältnis eines Monoazofarbstoffs gemäß der allgemeinen Formel (14) und eines Monoazofarbstoffs gemäß der allgemeinen Formel (17) 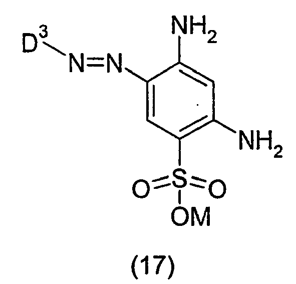 worin D², D³ und M wie in Anspruch 1 angegeben definiert sind, umsetzt.

12. Verfahren zur Herstellung von Farbstoffmischungen gemäß einem oder mehreren der Ansprüche 1 bis 8, für den Fall dass die Gruppen D² und D³ sowie D¹ und D⁴ gemäß den allgemeinen Formeln (I) und (II) gleiche Bedeutung besitzen (D² = D³ und D¹ = D⁴), **dadurch gekennzeichnet, dass** man ein Amin der allgemeinen Formel (18),
D²-NH₂ (18)
worin D² wie in Anspruch 1 angegeben definiert ist, in üblicher Weise diazotiert und auf eine Mischung der Kupplungskomponenten kuppelt und anschließend ein Amin der allgemeinen Formel (16), worin D¹ wie in Anspruch 1 angegeben definiert ist, in üblicher Weise diazotiert und mit der in erster Stufe erhaltenen Mischung der Monoazofarbstoffe der allgemeinen Formeln (14) und (17) kuppelt.

13. Verwendung von Reaktivfarbstoffmischungen gemäß einem oder mehreren der Ansprüche 1 bis 9 zum Färben von hydroxy- und/oder carbonamidgruppen-haltigem Fasermaterial.

## Claims

1. Reactive dye mixtures comprising one or more dyes of the hereinbelow indicated and defined general formula (I) 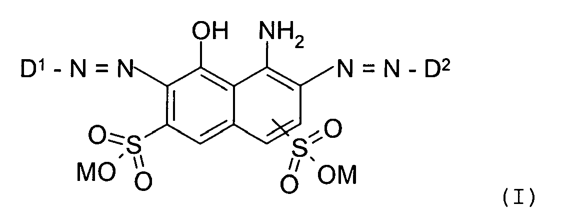 and one or more dyes of the hereinbelow indicated and defined general formula (II) 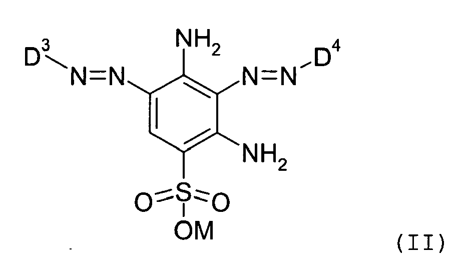 or one or more dyes of the hereinbelow indicated and defined general formula (III) 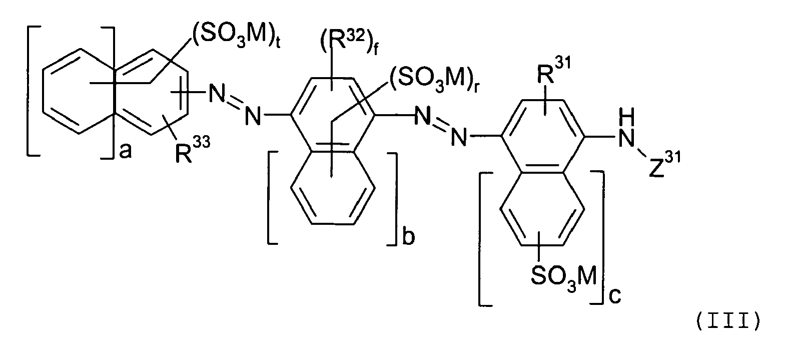 where:
D¹ and D² are each a group of the general formula (1) 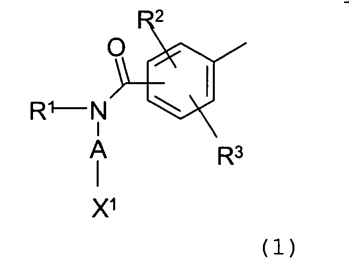 where
R¹ is hydrogen, (C₁-C₄)-alkyl, aryl or a substituted aryl radical;
R² and R³ are independently hydrogen, (C₁-C₄)-alkyl, (C₁-C₄)-alkoxy, hydroxyl, sulfo, carboxyl, amido or halogen; and
A is a phenylene group of the general formula (2) 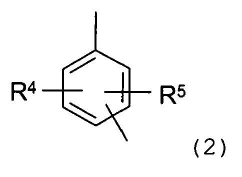 where
R⁴ and R⁵ are independently hydrogen, (C₁-C₄)-alkyl, (C₁-C₄)-alkoxy, hydroxyl, sulfo, carboxyl, amido or halogen; or
a naphthylene group of the general formula (3) 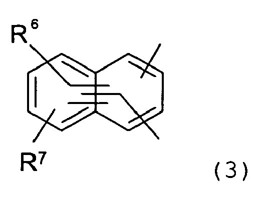 where
R⁶ and R⁷ are independently hydrogen, (C₁-C₄)-alkyl, (C₁-C₄)-alkoxy, hydroxyl, sulfo, carboxyl, amido or halogen; or
a polymethylene group of the general formula (4)
-(CR⁸R⁹)ₖ- (4)
where
k is an integer greater than 1 and
R⁸ and R⁹ are independently hydrogen, (C₁-C₄)-alkyl, (C₁-C₄)-alkoxy, hydroxyl, cyano, amido, halogen or aryl; and
X¹ is hydrogen or a group of the formula -SO₂-Z; or
are each a phenyl group of the general formula (5) 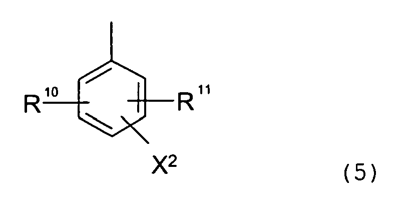 where
R¹⁰ and R¹¹ are independently hydrogen, (C₁-C₄)-alkyl, (C₁-C₄) -alkoxy, hydroxyl, sulfo, carboxyl, amido or halogen; and
X² has one of the meanings of X¹;
or are each a naphthyl group of the general formula (6) 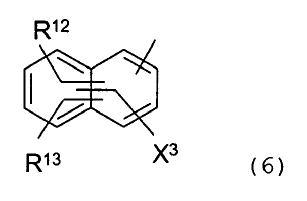 where
R¹² and R¹³ are independently hydrogen, (C₁-C₄)-alkyl, (C₁-C₄)-alkoxy, hydroxyl, sulfo, carboxyl, amido or halogen; and
X³ has one of the meanings of X¹;
Z is -CH=CH₂, -CH₂CH₂Z¹ or hydroxyl,
where
Z¹ is hydroxyl or an alkali-eliminable group; and
M is hydrogen, an alkali metal or one equivalent of an alkaline earth metal;
D³ and D⁴ independently have one of the meanings of D¹ or D² or are each a group of the general formula (7) or (8) 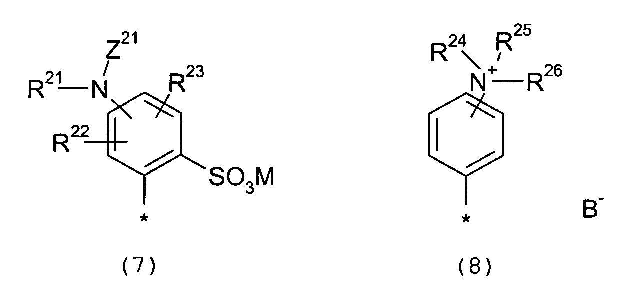 where
R²² and R²³ independently have one of the meanings of R²
and R³;
R²¹ is hydrogen, (C₁- C₄)-alkyl, unsubstituted or (C₁-C₄)-alkyl-, (C₁-C₄)-alkoxy-, sulfo-, halogen- or carboxyl-substituted phenyl; and
Z²¹ is a heterocyclic reactive radical, and
Z is as defined above;
R²⁴, R²⁵ and R²⁶ are each (C₁-C₄)-alkyl or (C₁-C₄)-hydroxyalkyl;
B⁻ is the equivalent of an anion, such as hydrogensulfate, sulfate, fluoride, chloride, bromide, dihydrogenphosphate, hydrogenphosphate, phosphate, hydroxide or acetate;
R³¹, R³², R³³ are independently hydrogen, (C₁-C₄)-alkyl, (C₁-C₄)-alkoxy, carboxyl, halogen, (C₁-C₄)-alkylcarbonylamino, benzoylamino, ureido;
Z³¹ has one of the meanings of Z²¹;
a, b, c are independently 0 or 1;
f, r are independently 0, 1 or 2; and
t is 0, 1, 2 or 3;
at least one of D¹ and D² is a group of the general formula (1);
when A is a group of the general formula (4), R¹ is aryl or substituted aryl; and
the reactive dye of the general formula (I) contains at least one -SO₂-Z group.

2. Reactive dye mixtures as claimed in claim 1, wherein the heterocyclic reactive radical Z²¹ is a group of the general formula (9) or (10) or (11) 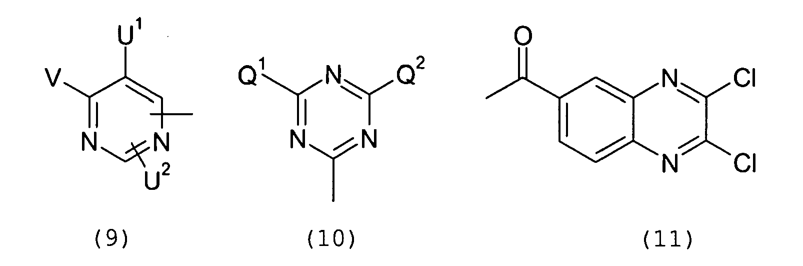 where
V is fluorine or chlorine;
U¹ and U² are independently fluorine, chlorine or hydrogen; and
Q¹ and Q² are independently chlorine, fluorine, cyanamido, hydroxyl, (C₁-C₆)-alkoxy, phenoxy, sulfophenoxy, mercapto, (C₁-C₆)-alkylmercapto, pyridino, carboxypyridino, carbamoylpyrimidino or a group of the general formula (12) or (13) 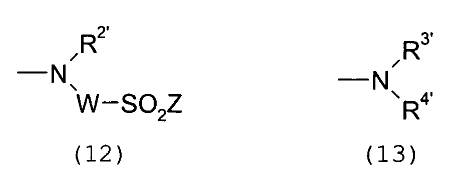 where
R²' is hydrogen or (C₁-C₆)-alkyl, sulfo-(C₁-C₆)-alkyl,
or phenyl which is unsubstituted or substituted by (C₁-C₄)-alkyl, (C₁-C₄)-alkoxy, sulfo, halogen,
carboxyl, acetamido or ureido;
R³' and R⁴' independently have one of the meanings of R²' or are each a group of the general formula (8), or combine to form a cyclic ring system of the formula -(CH₂)ⱼ- , where j is 4 or 5, or alternatively - (CH₂)₂-E-(CH₂)₂-, where E is oxygen, sulfur, sulfo, -NR⁵'-, where R⁵' = (C₁-C₆)-alkyl;
W is phenylene which is unsubstituted or substituted by 1 or 2 substituents, such as (C₁-C₄)-alkyl, (C₁-C₄)-alkoxy, carboxyl, sulfo, chlorine, bromine, or is (C₁-C₄)-alkylene-arylene or (C₂-C₆)-alkylene, which can be interrupted by oxygen, sulfur, sulfo, amino, carbonyl, carboxamido, or is phenylene-CONH-phenylene, which is unsubstituted or substituted by (C₁-C₄)-alkyl, (C₁-C₄)-alkoxy, hydroxyl, sulfo, carboxyl, amido, ureido or halogen, or is naphthylene, which is unsubstituted or substituted by one or two sulfo groups; and
the substituents R¹ to R⁵ , R⁸ to R¹¹, R²¹ and R³¹ are each hydrogen, R⁶, R⁷, R¹², R¹³, R²² and R²³ are each hydrogen or sulfo, R²⁴, R²⁵ and R²⁶ are each methyl, R³² is hydrogen or methyl and R³³ is hydrogen, methyl or methoxy.

3. Reactive dye mixtures as claimed in at least one of claims 1 and 2, wherein Z is vinyl, β-chloroethyl or β-sulfatoethyl.

4. Reactive dye mixtures as claimed in at least one of claims 1 to 3, wherein D³ or D⁴ in the general formula (II) is 3-(β-sulfatoethylsulfonyl)-phenyl, 4-(β-sulfatoethylsulfonyl)-phenyl, 2-sulfo-4-(β-sulfatoethylsulfonyl)-phenyl, 2-methoxy-5-(β-sulfatoethylsulfonyl)-phenyl, 2,5-dimethoxy-4-(β-sulfatoethylsulfonyl)-phenyl, 2-methoxy-5-methyl-4-(β-sulfatoethylsulfonyl)-phenyl, 3- or 4-vinylsulfonyl-phenyl, 4-(3-(2-sulfatoethylsulfonyl)-phenylcarbamoyl)-phenyl, 4-(4-(2-sulfatoethylsulfonyl)-phenylcarbamoyl)-phenyl, 3-(3-(2-sulfatoethylsulfonyl)-phenylcarbamoyl)-phenyl, 3-(4-(2-sulfatoethylsulfonyl)-phenylcarbamoyl)-phenyl, 1-sulfo-4-(2,4-difluoro-pyrimidin-6-yl)-amino-2-phenyl, or 1-sulfo-4-(4,6-difluoro-pyrimidin-2-yl)-amino-2-phenyl.

5. Reactive dye mixtures as claimed in at least one of claims 1 to 4, wherein Z³¹ in the general formula (III) is 2,4-dichloro-1,3,5-triazin-6-yl, 2-chloro-4-(3-(2-sulfatoethylsulfonyl)-phenyl-amino)-1,3,5-triazin-6-yl, 2-chloro-4-(4-(2-sulfatoethylsulfonyl)-phenyl-amino)-1,3,5-triazin-6-yl, 2-chloro-4-(3-(vinylsulfonyl)-phenylamino)-1,3,5-triazin-6-yl, 2-chloro-4-(4-(vinylsulfonyl)-phenylamino)-1,3,5-triazin-6-yl, 2-chloro-4-(N-methyl-N-(2-(2-sulfatoethylsulfonyl)-ethyl)-amino)-1,3,5-triazin-6-yl, 2-fluoro-4-morpholino-1,3,5-triazin-6-yl, 2-fluoro-4-(2-sulfophenyl-amino)-1,3,5-triazin-6-yl, 2-fluoro-4-(3-sulfophenylamino)-1,3,5-triazin-6-yl, 2-fluoro-4-(4-sulfophenylamino)-1,3,5-triazin-6-yl, 2-fluoro-4-(3-trimethylammonio-phenylamino)-1,3,5-triazin-6-yl, 2-fluoro-4-(4-trimethylammoniophenylamino)-1,3,5-triazin-6-yl, 2-fluoro-4-(3-(2-sulfatoethylsulfonyl)-phenylamino)-1,3,5-triazin-6-yl, 2-fluoro-4-(4-(2-sulfatoethylsulfonyl)-phenylamino)-1,3,5-triazin-6-yl, 2-fluoro-4-(3-(vinylsulfonyl)-phenylamino)-1,3,5-triazin-6-yl, 2-fluoro-4-(4-(vinylsulfonyl)-phenylamino)-1,3,5-triazin-6-yl, 2-fluoro-4-(N-methyl-N-(2-(2-sulfatoethylsulfonyl)-ethyl)-amino)-1,3,5-triazin-6-yl, 2-fluoro-4-(N-phenyl-N-(2-(2-sulfatoethylsulfonyl)-ethyl)-amino)-1,3,5-triazin-6-yl, 2,4-difluoro-pyrimidin-6-yl, 4,6-difluoro-pyrimidin-2-yl, 5-chloro-2,4-difluoro-pyrimidin-6-yl, 5-chloro-4,6-difluoro-pyrimidin-2-yl or 2,3-dichloroquinoxaline-6-carbonyl.

6. Reactive dye mixtures as claimed in at least one of claims 1 to 5, comprising at least one dye of the general formula (Ia) 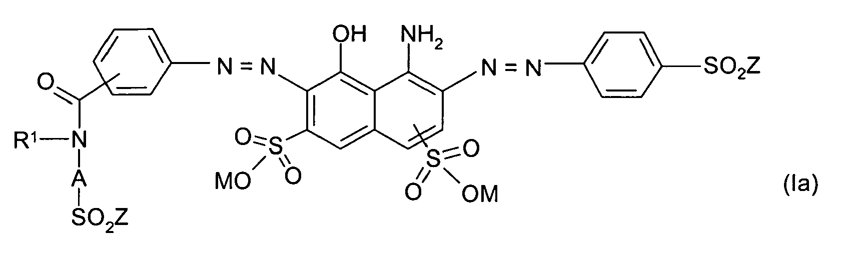 and at least one dye of the general formula (IIa) 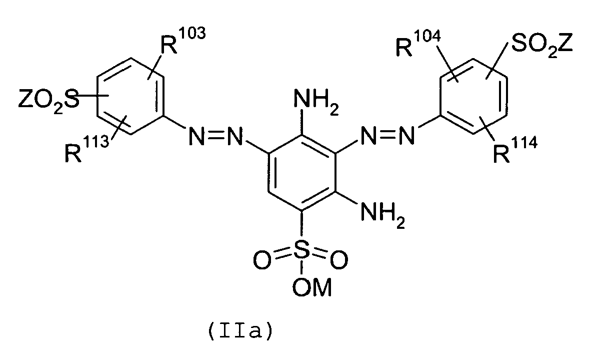 or at least one dye of the general formula (IIIa) 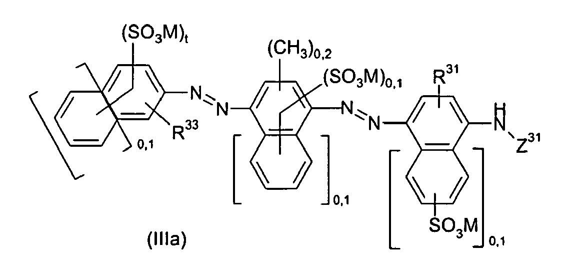 where M, A, R¹, Z, R³¹, R³³, Z³¹ and t are each as defined in claim 1 and R¹⁰³, R¹¹³, R¹⁰⁴ and R¹¹⁴ in the general formula (IIa) are independently hydrogen, methyl, methoxy or sulfo.

7. A reactive dye mixture as claimed in claim 6, wherein A in the formula (Ia) is phenylene, Z in the formulae (Ia) and (IIa) is vinyl or β-sulfatoethyl and t in the formula (IIIa) is 1 or 2 and Z³¹ in the formula (IIIa) is as defined in claim 1.

8. Reactive dye mixtures as claimed in one or more of claims 1 to 7, comprising one or more dyes of the formula (I) in a fraction of 30 to 95% by weight and one or more dyes of the formula (II) or (III) in a fraction of 5 to 70% by weight.

9. Reactive dye mixtures as claimed in claim 1, comprising one or more monoazo dyes of the formula (14) and/or one or more monoazo dyes of the formula (15) each at 0.5 to 6% by weight 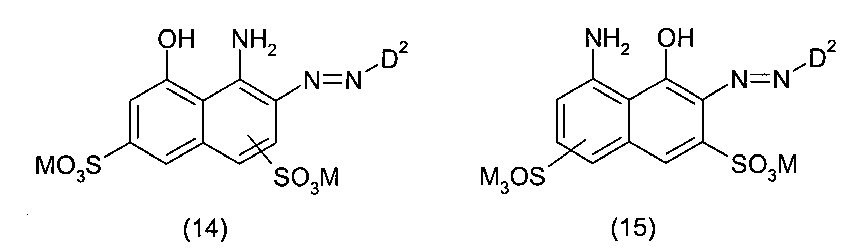 where D² and M are each as defined in claim 1.

10. A process for producing dye mixtures as claimed in one or more of claims 1 to 8, which comprises the individual dyes of the formulae (I) and (II) or (III) and, if used, (14) and (15) being mixed with each other in the required proportions either mechanically in solid form or in the form of aqueous solutions.

11. A process for producing dye mixtures as claimed in one or more of claims 1 to 8 for the case where D¹ and D⁴ in the general formulae (I) and (II) are the same, which comprises diazotizing an amine of the general formula (16)
D¹ - NH₂ (16),
where D¹ is as defined in claim 1, in a conventional manner and then reacting the resulting diazonium compound with an aqueous solution or suspension of a mixture having a defined ratio of a monoazo dye conforming to the general formula (14) and a monoazo dye conforming to the general formula (17) 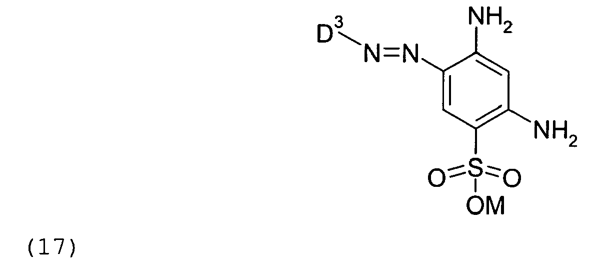 where D², D³ and M are each as defined in claim 1.

12. A process for producing dye mixtures as claimed in one or more of claims 1 to 8 for the case where the groups D² and D³ and also D¹ and D⁴ in the general formulae (I) and (II) are the same (D² = D³ and D¹ = D⁴), which comprises diazotizing an amine of the general formula (18)
D²-NH₂ (18)
where D² is as defined in claim 1, in a conventional manner and coupling the resulting diazonium compound onto a mixture of the coupling components and then diazotizing an amine of the general formula (16) where D¹ is as defined in claim 1 in a conventional manner and coupling the resulting diazonium compound with the mixture of the monoazo dyes of the general formulae (14) and (17) which is obtained in the first step.

13. The use of reactive dye mixtures of one or more of claims 1 to 9 for dyeing hydroxyl- and/or carboxamido-containing fiber material.

## Revendications

1. Mélanges de colorants réactifs, qui contiennent un ou plusieurs colorants de la formule générale (I) indiquée et définie ci-dessous 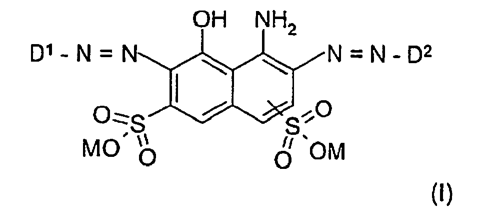 et un ou plusieurs colorants de la formule générale (II) indiquée et définie ci-dessous 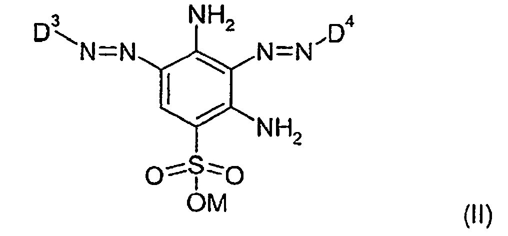 ou un ou plusieurs colorants de la formule générale (III) indiquée et définie ci-dessous 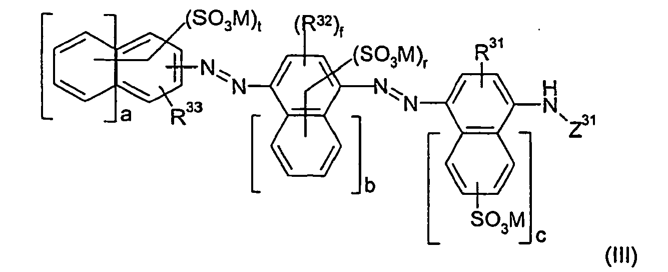 D¹ et D² représentent un groupe de formule générale (1) 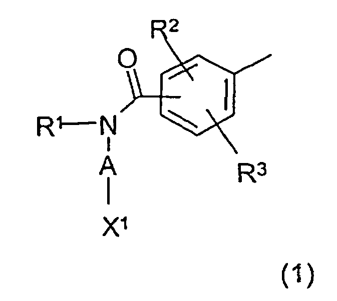 où
R¹ représente hydrogène, un radical (C₁-C₄)-alkyle, aryle ou aryle substitué ;
R² et R³ représentent, indépendamment l'un de l'autre, hydrogène, (C₁-C₄)-alkyle, (C₁-C₄)-alcoxy, hydroxy, sulfo, carboxy, amido ou halogène ; et
A représente un groupe phénylène de formule générale (2) 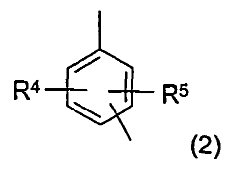
où
R⁴ et R⁵ signifient, indépendamment l'un de l'autre, hydrogène, (C₁-C₄)-alkyle, (C₁-C₄)-alcoxy, hydroxy, sulfo, carboxy, amido ou halogène ; ou
un groupe naphtylène de formule générale (3) 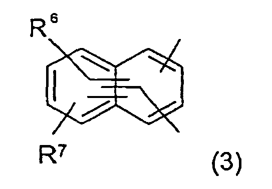 où
R⁶ et R⁷ où signifient, indépendamment l'un de l'autre, hydrogène, (C₁-C₄)-alkyle, (C₁-C₄)-alcoxy, hydroxy, sulfo, carboxy, amido ou halogène ; ou un groupe polyméthylène de formule générale (4)
-(CR⁸R⁹)ₖ- (4)
k est un nombre entier supérieur à 1 et
R⁸ et R⁹ représentent, indépendamment l'un de l'autre, hydrogène, (C₁-C₄)-alkyle, (C₁-C₄)-alcoxy, hydroxy, cyano, amido, halogène ou aryle ; et
X¹ représente hydrogène ou un groupe de formule -SO₂-Z ; ou
représentent un groupe phényle de formule générale (5) 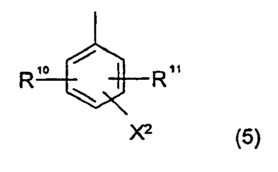 où
R¹⁰ et R¹¹ représentent, indépendamment l'un de l'autre, hydrogène, (C₁-C₄)-alkyle, (C₁-C₄)-alcoxy, hydroxy, sulfo, carboxy, amido ou halogène ; et
X² présente une des significations de X¹ ;
ou signifient un groupe naphtyle de formule générale (6) 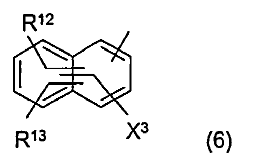 où
R¹² et R¹³ représentent, indépendamment l'un de l'autre, hydrogène, (C₁-C₄)-alkyle, (C₁-C₄)-alcoxy, hydroxy, sulfo, carboxy, amido ou halogène ; et
X³ présente une des significations de X¹ ;
Z où signifie -CH=CH₂, -CH₂CH₂Z¹ ou hydroxy,
Z¹ représente hydroxy ou un groupe pouvant être dissocié sous l'effet d'alcalis ; et
M signifie hydrogène, un métal alcalin ou un équivalent d'un métal alcalino-terreux ;
D³ et D⁴ présentent indépendamment l'un de l'autre une des significations de D¹ ou D² ou représentent un groupe de formule générale (7) ou (8) 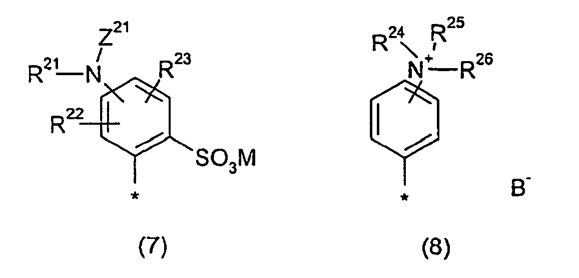
où
R²² et R²³ présentent, indépendamment l'un de l'autre, une des significations de R² et R³ ;
R²¹ représente hydrogène, (C₁-C₄)-alkyle, phényle non substitué ou substitué par (C₁-C₄)-alkyle, (C₁-C₄)-alcoxy, sulfo, halogène ou carboxy ; et
Z²¹ représente un radical réactif hétérocyclique et
Z a la signification susmentionnée ;
R²⁴, R²⁵ et R²⁶ représentent (C₁-C₄)-alkyle ou (C₁-C₄)-hydroxyalkyle ;
B⁻ représente l'équivalent d'un anion, tel qu'un anion hydrogénosulfate, sulfate, fluorure, chlorure, bromure, dihydrogénophosphate, hydrogénophosphate, phosphate, hydroxyde ou acétate ;
R³¹, R³², R³³ représentent, indépendamment l'un de l'autre, hydrogène, (C₁-C₄)-alkyle, (C₁-C₄)-alcoxy, carboxy, halogène, (C₁-C₄)-alkylcarbonylamino, benzoylamino, uréido ;
Z³¹ présente une des significations de Z²¹ ;
a, b, c valent, indépendamment l'un de l'autre, 0 ou 1 ;
f, r valent, indépendamment l'un de l'autre, 0, 1 ou 2 ; et
t vaut 0, 1, 2 ou 3 ;
où au moins un des radicaux D¹ et D² représente un groupe de formule générale (1) ;
où dans le cas où A représenterait un groupe de formule générale (4), R¹ représente aryle ou aryle substitué ; et
où le colorant réactif de formule générale (I) contient au moins un groupe -SO₂-Z.

2. Mélanges de colorants réactifs selon la revendication 1, **caractérisés en ce que** le radical réactif hétérocyclique Z²¹ représente un groupe de formule générale (9) ou (10) ou (11), 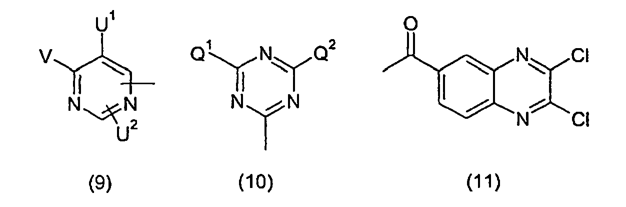 où
V signifie fluor ou chlore ;
U¹, U² représentent, indépendamment l'un de l'autre fluor, chlore ou hydrogène ; et
Q¹, Q² signifient indépendamment l'un de l'autre chlore, fluor, cyanamido, hydroxy, (C₁-C₆)-alcoxy, phénoxy, sulfophénoxy, mercapto, (C₁-C₆)-alkylmercapto, pyridino, carboxypyridino, carbamoylpyrimidino ou un groupe de formule générale (12) ou (13) 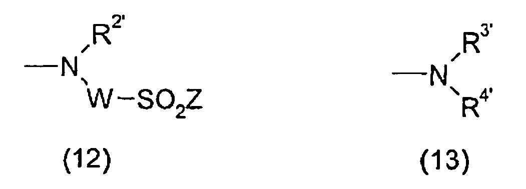
où
R^{2'} représente hydrogène ou (C₁-C₆)-alkyle, sulfo-(C₁-C₆)-alkyle ou phényle qui est non substitué ou substitué par (C₁-C₄)-alkyle, (C₁-C₄)-alcoxy, sulfo, halogène, carboxy, acétamido, uréido ;
R^{3'} et R^{4'} présentent, indépendamment l'un de l'autre, une des significations de R^{2'} ou représentent un groupe de formule générale (8) ou forment un système cyclique de formule -(CH₂)ⱼ-, où j vaut 4 ou 5, ou en variante - (CH₂)₂-E-(CH₂)₂-, où E représente oxygène, soufre, sulfo, -NR^{5'}- avec R^{5'} = (C₁-C₆)-alkyle ;
W représente phénylène, qui est non substitué ou substitué par 1 ou 2 substituants, tels que (C₁-C₄)-alkyle, (C₁-C₄)-alcoxy, carboxy, sulfo, chlore, brome, ou représente (C₁-C₄)-alkylène-arylène ou (C₂-C₆)-alkylène, qui peut être interrompu par oxygène, soufre, sulfo, amino, carbonyle, carboxamido, ou représente phénylène-CONH-phénylène, qui est non substitué ou substitué par (C₁-C₄)-alkyle, (C₁-C₄)-alcoxy, hydroxy, sulfo, carboxy, amido, uréido ou halogène, ou représente naphtylène, qui est non substitué ou substitué par un ou deux groupes sulfo ; et
les substituants R¹ à R⁵, R⁸ à R¹¹, R²¹ et R³¹ signifient hydrogène, R⁶, R⁷, R¹², R¹³, R²² et R²³ signifient hydrogène ou sulfo, R²⁴, R²⁵ et R²⁶ signifient méthyle, R³² signifie hydrogène ou méthyle et R³³ signifie hydrogène, méthyle ou méthoxy.

3. Mélanges de colorants réactifs selon au moins l'une quelconque des revendications 1 ou 2, **caractérisés en ce que** Z signifie vinyle, β-chloroéthyle ou β-sulfatoéthyle.

4. Mélanges de colorants réactifs selon au moins l'une quelconque des revendications 1 à 3, **caractérisés en ce que** D³ ou D⁴ dans la formule générale (II) signifient 3-(β-sulfatoéthylsulfonyl)-phényle, 4-(β-sulfatoéthylsulfonyl)-phényle, 2-sulfo-4-(β-sulfatoéthylsulfonyl)-phényle, 2-méthoxy-5-(β-sulfatoéthylsulfonyl)-phényle, 2,5-diméthoxy-4-(β-sulfatoéthylsulfonyl)-phényle, 2-méthoxy-5-méthyl-4-(β-sulfatoéthylsulfonyl)-phényle, 3-vinylsulfonylphényle ou 4-vinylsulfonylphényle, 4-(3-(2-sulfatoéthylsulfonyl)-phénylcarbamoyl)-phényle, 4-(4-(2-sulfatoéthylsulfonyl)-phénylcarbamoyl)-phényle, 3-(3-(2-sulfatoéthylsulfonyl)-phénylcarbamoyl)-phényle, 3-(4-(2-sulfatoéthylsulfonyl)-phénylcarbamoyl)-phényle, 1-sulfo-4-(2,4-difluoropyrimidin-6-yl)-amino-2-phényle,
ou 1-sulfo-4-(4,6-difluoropyrimidin-2-yl)-amino-2-phényle.

5. Mélanges de colorants réactifs selon au moins l'une quelconque des revendications 1 à 4, **caractérisés en ce que** Z³¹ dans la formule générale (III) signifie 2,4-dichloro-1,3,5-triazin-6-yle, 2-chloro-4-(3-(2-sulfatoéthylsulfonyl)-phénylamino)-1,3,5-triazin-6-yle, 2-chloro-4-(4-(2-sulfatoéthylsulfonyl)-phénylamino)-1,3,5-triazin-6-yle, 2-chloro-4-(3-(vinylsulfonyl)-phénylamino)-1,3,5-triazin-6-yle, 2-chloro-4-(4-(vinylsulfonyl)-phénylamino)-1,3,5-triazin-6-yle, 2-chloro-4-(N-méthyl-N-(2-(2-sulfatoéthylsulfonyl)-éthyl)-amino)-1,3,5-triazin-6-yle, 2-fluoro-4-morpholino-1,3,5-triazin-6-yle, 2-fluoro-4-(2-sulfophénylamino)-1,3,5-triazin-6-yle, 2-fluoro-4-(3-sulfophénylamino)-1,3,5-triazin-6-yle, 2-fluoro-4-(4-sulfophénylamino)-1,3,5-triazin-6-yle, 2-fluoro-4-(3-triméthylammoniumphénylamino)-1,3,5-triazin-6-yle, 2-fluoro-4-(4-triméthylammoniumphénylamino)-1,3,5-triazin-6-yle, 2-fluoro-4-(3-(2-sulfatoéthylsulfonyl)-phénylamino)-1,3,5-triazin-6-yle, 2-fluoro-4-(4-(2-sulfatoéthylsulfonyl)-phénylamino)-1,3,5-triazin-6-yle, 2-fluoro-4-(3-(vinylsulfonyl)-phénylamino)-1,3,5-triazin-6-yle, 2-fluoro-4-(4-(vinylsulfonyl)-phénylamino)-1,3,5-triazin-6-yle, 2-fluoro-4-(N-méthyl-N-(2-(2-sulfatoéthylsulfonyl)-éthyl)-amino)-1,3,5-triazin-6-yle, 2-fluoro-4-(N-phényl-N-(2-(2-sulfatoéthylsulfonyl)-éthyl)-amino)-1,3,5-triazin-6-yle, 2,4-difluoropyrimidin-6-yle, 4,6-difluoropyrimidin-2-yle, 5-chloro-2,4-difluoropyrimidin-6-yle, 5-chloro-4,6-difluoropyrimidin-2-yle ou 2,3-dichlorquinoxalin-6-carbonyle.

6. Mélanges de colorants réactifs selon au moins l'une quelconque des revendications 1 à 5, **caractérisés en ce qu'**au moins un colorant de formule générale (Ia) 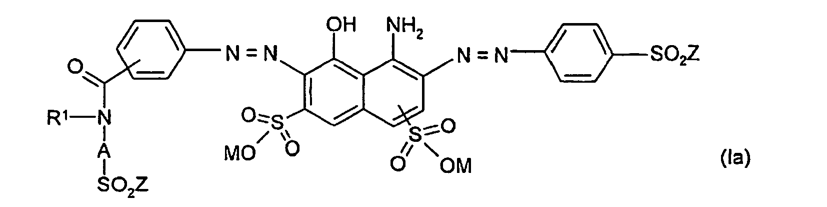 et au moins un colorant de formule générale (IIa) 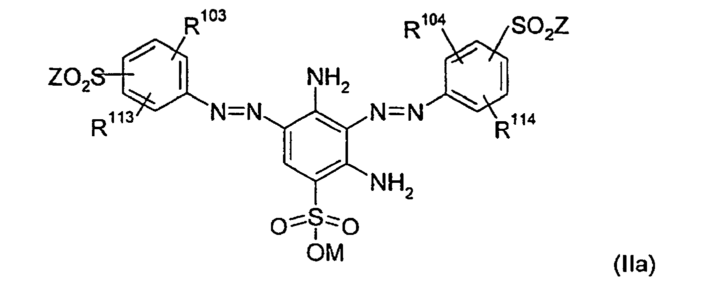 ou au moins un colorant de formule générale (IIIa) 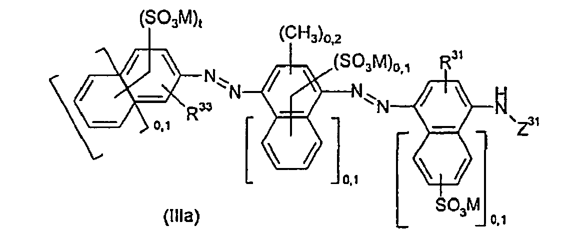 sont contenusn où M, A, R¹, Z, R³¹, R³³, Z³¹ et t sont définis comme indiqué dans la revendication 1 et, dans la formule générale (IIa), R¹⁰³, R¹¹³, R¹⁰⁴ et R¹¹⁴ représentent, indépendamment l'un de l'autre, hydrogène, méthyle, méthoxy ou sulfo.

7. Mélange de colorants réactifs selon la revendication 6, **caractérisé en ce que,** dans la formule (Ia) A représente phénylène, dans les formules (Ia) et (IIa), Z représente vinyle ou β-sulfatoéthyle, et, dans la formule (IIIa) t vaut 1 ou 2 et Z³¹ est défini comme indiqué dans la revendication 1.

8. Mélanges de colorants réactifs selon l'une ou plusieurs des revendications 1 à 7, contenant un ou plusieurs colorants de formule (I) en une proportion de 30 à 95% en poids et un ou plusieurs colorants de formule (II) ou (III) en une proportion de 5 à 70% en poids.

9. Mélanges de colorants réactifs selon la revendication 1, contenant un ou plusieurs colorants monoazo de formule (14) et/ou un ou plusieurs colorants monoazo de formule (15), à chaque fois en une proportion de 0,5 à 6% en poids 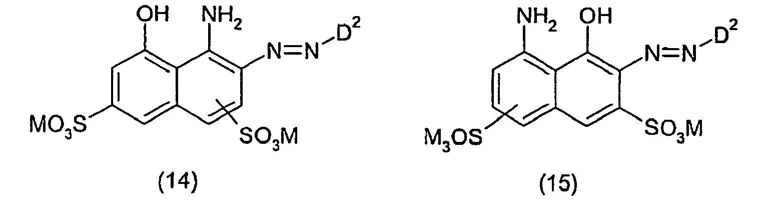 D² et M ayant les significations indiquées dans la revendication 1.

10. Procédé pour la préparation de mélanges de colorants selon l'une ou plusieurs des revendications 1 à 8, **caractérisé en ce que** les différents colorants des formules (I) et (II) ou (III) et le cas échéant (14) et (15) sont mélangés dans un rapport prédéfini, soit mécaniquement sous forme solide, soit sous forme des solutions aqueuses.

11. Procédé pour la préparation de mélanges de colorants selon l'une ou plusieurs des revendications 1 à 8, pour le cas où les groupes D¹ et D⁴ selon les formules générales (I) et (II) présenteraient la même signification, **caractérisé en ce qu'**on diazote une amine de formule générale (16)
D¹-NH₂ (16),
dans laquelle D¹ est défini comme indiqué dans la revendication 1, de manière usuelle et on transforme ensuite le composé de diazonium obtenu avec une solution ou une suspension aqueuse d'un mélange, avec un rapport défini, d'un colorant monoazo selon la formule générale (14) et d'un colorant monoazo selon la formule générale (17) 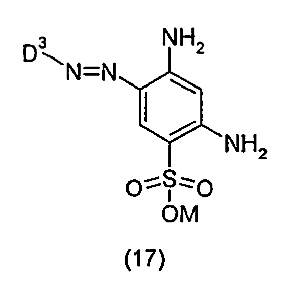 dans laquelle D², D³ et M sont définis comme indiqué dans la revendication 1.

12. Procédé pour la préparation de mélanges de colorants selon l'une ou plusieurs des revendications 1 à 8, pour le cas où les groupes D² et D³ ainsi que D¹ et D⁴ selon les formules générales (I) et (II) présenteraient la même signification (D² = D³ et D¹ = D⁴), **caractérisé en ce qu'**on diazote une amine de formule générale (18)
D²-NH₂ (18)
dans laquelle D² est défini comme indiqué dans la revendication 1, de manière usuelle et on couple sur un mélange de composants de couplage puis on diazote une amine de formule générale (16) dans laquelle D¹ est défini comme indiqué dans la revendication 1, de manière usuelle et on couple avec le mélange obtenu dans la première étape des colorants monoazo des formules générales (14) et (17).

13. Utilisation de mélanges de colorants réactifs selon l'une ou plusieurs des revendications 1 à 9 pour la teinture de matériau fibreux contenant des groupes hydroxy et/ou carboxamide.
